(19) Europäisches Patentamt

European Patent Office

Office européen des brevets

(11) **EP 1 504 557 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.[7]: **H04L 1/06**, H04L 1/00, H04L 25/03, H04L 25/02

(21) Anmeldenummer: **03717328.3**

(22) Anmeldetag: **06.05.2003**

(86) Internationale Anmeldenummer:
**PCT/EP2003/004759**

(87) Internationale Veröffentlichungsnummer:
**WO 2003/096599 (20.11.2003 Gazette 2003/47)**

(54) **DIVERSITÄTSVERFAHREN UND VORRICHTUNG**

DIVERSITY METHOD AND DEVICE

PROCÉDÉ DE DIVERSITÉ ET DISPOSITIF

(84) Benannte Vertragsstaaten:
**AT BE BG CH CY CZ DE DK EE ES FI FR GB GR HU IE IT LI LU MC NL PT RO SE SI SK TR**

(30) Priorität: **10.05.2002 DE 10220892**

(43) Veröffentlichungstag der Anmeldung:
**09.02.2005 Patentblatt 2005/06**

(73) Patentinhaber: **Fraunhofer-Gesellschaft zur Förderung der angewandten Forschung e.V. 80636 München (DE)**

(72) Erfinder:
• **BREILING, Marco**
  **91054 Erlangen (DE)**
• **LAMPE, Alexander**
  **04288 Leipzig (DE)**
• **HUBER, Johannes, B.**
  **91094 Langensendelbach (DE)**
• **EBERLEIN, Ernst**
  **91091 Grossenseebach (DE)**

(74) Vertreter: **Schoppe, Fritz et al Schoppe, Zimmermann, Stöckeler & Zinkler Patentanwälte Postfach 246 82043 Pullach bei München (DE)**

(56) Entgegenhaltungen:
• SU H-J ET AL: "SPACE-TIME TURBO CODES WITH FULL ANTENNA DIVERSITY" IEEE TRANSACTIONS ON COMMUNICATIONS, IEEE INC. NEW YORK, US, Bd. 49, Nr. 1, 1. Januar 2001 (2001-01-01), Seiten 47-57, XP001038827 ISSN: 0090-6778

• BRUNEL L ET AL: "Iterative interference cancellation scheme with pilot-aided space-time estimation in DS-CDMA systems" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, Bd. 1 OF 4. CONF. 54, 7. Oktober 2001 (2001-10-07), Seiten 197-201, XP010562673 ISBN: 0-7803-7005-8

• WIJK VAN D J ET AL: "FADING CORRELATION AND ITS EFFECT ON THE CAPACITY OF SPACE-TIME TURBO CODED DS/SDMA SYSTEMS" MILCOM 1999. IEEE MILITARY COMMUNICATIONS CONFERENCE PROCEEDINGS. ATLANTIC CITY, NJ, OCT. 31 - NOV. 3, 1999, IEEE MILITARY COMMUNICATIONS CONFERENCE, NEW YORK, NY: IEEE, US, Bd. VOL 1 OF 2 CONF. 18, 31. Oktober 1999 (1999-10-31), Seiten 538-542, XP000921974 ISBN: 0-7803-5539-3

• YONG W ET AL: "MULTIUSER DETECTOR WITH TRANSMIT DIVERSITY IN THE CONVOLUTIONALLY CODED DS/CDMA SYSTEMS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, Bd. 1 OF 3. CONF. 51, 15. Mai 2000 (2000-05-15), Seiten 552-555, XP000970680 ISBN: 0-7803-5719-1

**Beschreibung**

Die vorliegende Erfindung bezieht sich auf die digitale Übertragungstechnik und insbesondere auf Konzepte für eine Nachrichtenübertragung über Kanäle, die ein starkes Fading haben, wie z. B. Funkkanäle.

Die WO 00/36783 offenbart eine Vorrichtung und ein Verfahren zum Senden von Informationen und eine Vorrichtung und ein Verfahren zum Empfangen von Informationen. Die Vorrichtung zum Senden von Informationen umfaßt eine Informationsquelle, einen Redundanz-hinzufügenden Codierer mit einer Coderate kleiner als 1/2, einen Aufteiler zum Aufteilen der Ausgabe des Codierers in zwei getrennte Datenströme, wobei ein Datenstrom über einen ersten Kanal übertragen wird, während der andere Datenstrom über einen zweiten Kanal übertragen wird. Der Redundanz-hinzufügende Codierer ermöglicht eine Vorwärtsfehlerkorrektur, die in einem empfängerseitigen Decodierer ausgenutzt wird, um eine gute Empfangsqualität sicherzustellen.

Der erste und der zweite Kanal unterscheiden sich dadurch, daß sie räumlich unterschiedlich sind, und daß zusätzlich eine Time-Diversity-Funktion eingebaut ist, und zwar dahingehend, daß eine über den ersten Kanal übertragene Information zu einem späteren Zeitpunkt über den anderen Kanal noch einmal übertragen wird.

Empfängerseitig existieren zwei voneinander unterschiedliche Empfänger zum Empfangen des über den ersten Kanal übertragenen Signals einerseits und zum Empfangen des über den anderen Kanal übertragenen Signals andererseits. Die Empfängerausgangssignale werden mittels eines Kombinierers kombiniert und einem Decodierer zugeführt, der beispielsweise als Viterbi-Decodierer aufgebaut ist und dessen Ausgangswerte in einen Reed-Solomon-Decoder eingespeist werden.

Bei diesem bekannten Sende/Empfangssystem, das unter Verwendung zweier an unterschiedlichen Positionen angeordneten Satelliten als Sender einsetzbar ist, sind die Satelliten derart ausgebildet, daß sie in unterschiedlichen Frequenzbändern senden. Damit ist es ohne weiteres möglich, das Signal des einen Satelliten von dem Signal des anderen Satelliten zu unterscheiden, da die Satelliten-Empfangssignale in unterschiedlichen Frequenzbändern liegen und frequenzselektiv empfangen werden können.

Nachteilig an diesem Konzept ist jedoch die Tatsache, daß zwei komplette Frequenzbänder benötigt werden, nämlich ein erstes Frequenzband, auf dem der erste Satellit sendet, und ein zweites Frequenzband, auf dem der zweite Satellit sendet.

Generell ist jedoch die Bandbreite eines Übertragungskanals ein knappes Gut, so daß oftmals nur sehr wenig Bandbreite für eine Anwendung zur Verfügung steht oder daß die von einer Anwendung benötigte Bandbreite teuer bezahlt werden muß. Dies erhöht die Kosten für ein System erheblich. Insbesondere bei Rundfunkanwendungen, bei denen der Entwicklungs- und Installationsaufwand der Sender und der Satelliten auf die Empfangsgeräte umgelegt werden muß, führt dies zu einer Verteuerung der Empfangsgeräte. Gerade auf dem wettbewerbsintensiven Markt der Rundfunk-Empfänger können jedoch bereits kleine oder mittlere Preisunterschiede dazu führen, daß sich ein System am Markt durchsetzt, während ein anderes System keinen Anklang findet und vom Markt verschwindet.

Die Aufgabe der vorliegende Erfindung besteht darin, ein günstigeres Sende/Empfangs-Konzept zu schaffen.

Diese Aufgabe wird durch eine Sendevorrichtung nach Patentanspruch 1, ein Verfahren zum Senden nach Patentanspruch 11, eine Empfangsvorrichtung nach Patentanspruch 12 oder ein Verfahren zum Empfangen nach Patentanspruch 21 gelöst.

Der vorliegenden Erfindung liegt die Erkenntnis zugrunde, daß eine Sendevorrichtung mit Redundanz-hinzufügendem Codierer, um eine Vorwärtsfehlerkorrektur zu erreichen, mit zwei Sendern gekoppelt wird, die räumlich unterschiedliche Positionen haben, um ein Space-Diversity zu erreichen, wobei ferner vorzugsweise unter Verwendung eines Interleavers auch eine Time-Diversity-Funktion vorhanden ist. Erfindungsgemäß senden beide Sender im selben Frequenzband unter Verwendung derselben Trägerfrequenz. Erfindungsgemäß wird daher ein Space-Diversity mit Vorwärtsfehlerkorrektur (durch den Redundanz-hinzufügenden Codierer) und vorzugsweise auch ein Time-Diversity durch jeweilige Interleaver in den beiden Sendevorrichtungen erreicht, während dennoch nur ein Frequenzband benötigt wird, dahingehend, daß im Vergleich zu dem bekannten Sende/Empfangskonzept lediglich die halbe Bandbreite benötigt wird, so daß lediglich die halben Bandbreitekosten anfallen. Es sei darauf hingewiesen, daß die Halbierung der Bandbreite insbesondere im Satellitenrundfunk erhebliche Kosteneinsparungen mit sich bringt, da die Kosten für das Erzeugen eines Satelliten einerseits und besonders für das Transportieren des Satelliten an seine z. B. geostationäre Position erheblich sind. Nachdem nur halb so viel Bandbreite benötigt wird, werden diese Kosten halbiert.

Nachdem die Sendesignale des ersten und des zweiten Senders im selben Frequenzband liegen, werden sie sich an der Empfängerantenne überlagern und zu abhängig vom Kanal mehr oder weniger starken Interferenzen führen. Das erfindungsgemäße Empfängerkonzept ist daher dahingehend ausgerichtet, daß es das an einer Empfangsantenne anliegende Empfangssignal synchronisiert auf den ersten Sender abtastet, um ein erstes Empfangssignal zu erhalten, und ferner synchronisiert auf den zweiten Sender abtastet, um ein zweites Empfangssignal zu erhalten. Beide Empfangssignale sind durch Interferenzen vom jeweils anderen Sender gestört. Zur Reduzierung bzw. Elimination dieser Störung werden die beiden Empfangssignale decodiert, um empfangene Codeeinheiten wiederzugewinnen, die der Redundanz-hinzufügende Codierer im Sender erzeugt hat. Aus diesen Codeeinheiten werden Interferenzsignale im Empfänger berechnet und - in einer iterativen Schleife mit einem oder mehreren Iterationsschritten - von den beiden Empfangssignalen subtrahiert, um eine Interferenzreduktion zu erreichen. Die Interferenz-reduzierten Empfangssignale, also die verbesserten Empfangssignale werden dann wieder dem Decodierer zugeführt, um auf der Basis der Interferenz-reduzierten Empfangssignale das den Codeeinheiten zugrundeliegende Informationswort wiederzugewinnen. Hierzu ist eine Steuerung vorgesehen, die zum einen die Iteration steuert und die zum anderen feststellt, ob ein Abbruchkriterium der Iteration festgestellt ist.

Bei einem bevorzugten Ausführungsbeispiel der vorliegenden Erfindung wird ein Redundanz-hinzufügender Codierer mit einer Coderate $R_c$ von 1/4 verwendet, der aus einer Informationseinheit vier Codeeinheiten erzeugt. Diese Codeeinheiten werden dann in zwei Untergruppen von Codeeinheiten aufgeteilt, so daß der erste Sender zwei Codeeinheiten erhält, und der zweite Sender ebenfalls zwei Codeeinheiten erhält. Jeweilige Interleaver in den beiden Sendezweigen liefern eine Time-Diversity-Funktion, die besonders bei Burst-Fehlern, wie z. B. Deep Fades, von Vorteil ist. Jeder Sender umfaßt ferner einen QPSK-Mapper, um eine QPSK-Modulation durchzuführen. In anderen Worten ausgedrückt werden zwei Codeeinheiten am Ausgang eines Interleavers gruppiert, wonach dieser 2-Codeeinheiten-Gruppe ein QPSK-Symbol zugewiesen wird, das dann auf eine Trägerfrequenz umgesetzt wird und vom Sender gesendet wird. Im Empfänger ist unter dem üblichen Empfänger-Front-End, das die Antenne sowie eine Abwärtskonversionseinrichtung umfaßt, ein Demapper vorgesehen, um aus einem empfangenen QPSK-Symbol die beiden Codeeinheiten wiederzugewinnen.

Der Demapper bei einem bevorzugten Ausführungsbeispiel der vorliegenden Erfindung ist als Soft-Demapper ausgebildet, derart, daß er keine harte Entscheidung durchführt, sondern Wahrscheinlichkeiten liefert, daß eine Codeeinheit eine 0 oder eine 1 ist. Hinter dem Demapper werden die Codeeinheiten, die als Wahrscheinlichkeiten vorliegen, wieder einem De-Interleaver zugeführt, der die Codeeinheiten-Verschachtelung im Sender rückgängig macht. Die "de-interleavten" Codeeinheiten-Wahrscheinlichkeiten werden dann einem Soft-In-Soft-Out-Decoder zugeführt, der vorzugsweise als BCJR-SISO-Decoder ausgeführt ist. Dem SISO-Decoder werden die Wahrscheinlichkeiten für Codeeinheiten aus beiden Empfangszweigen zugeführt, und zwar als Pre-Decoder-Wahrscheinlichkeiten.

Der SISO-Decodierer liefert ausgangsseitig Post-Decodierwahrscheinlichkeiten für die einzelnen Codiereinheiten, die dazu verwendet werden, um die Interferenzsignale zu schätzen. Hierzu werden die Post-Decodier-Wahrscheinlichkeiten wieder wie im Sender interleaved und Schätzeinrichtungen zugeführt, um aus den Codeeinheiten-Wahrscheinlichkeiten die übertragenen QPSK-Symbole "weich" abzuschätzen.

Die geschätzten QPSK-Symbole werden dann im Empfänger mit einer Übertragungskanal-Charakteristik beaufschlagt, welche durch übliche Kanalschätzverfahren erhalten wird, um Interferenzsignale zu erhalten, die schließlich von den Empfangssignalen "über Kreuz" subtrahiert werden. Insbesondere wird das Interferenzsignal, das auf der Basis des zweiten Empfangssignals berechnet worden ist, von dem ersten Empfangssignal subtrahiert, während das Interferenzsignal, das auf der Basis des ersten Empfangssignals berechnet worden ist, von dem zweiten Empfangssignal subtrahiert wird, so daß verbesserte erste und zweite Empfangssignale erhalten werden, die wieder, wie die "ursprünglichen ersten und zweiten Empfangssignale" verarbeitet werden, um wieder Post-Decodier-Wahrscheinlichkeiten zu berechnen, mit denen in eine weitere Iterationsschleife gegangen werden kann.

Bei einem bevorzugten Ausführungsbeispiel der vorliegenden Erfindung wird ferner nicht ein üblicher Soft-Demapper eingesetzt, sondern ein spezieller Soft-Demapper, der unter Verwendung von Seiteninformationen eine verbesserte Demapping-Entscheidung durchführt. Hierzu wird aus den Post-Decodier-Wahrscheinlichkeiten am Ausgang des SISO-Decodierers ein Satz von extrinsischen Decodierwahrscheinlichkeiten berechnet, die ebenfalls nach entsprechender Interleaving-Bearbeitung dem Demapper in einem Zweig als Seiteninformationen zugeführt werden, um eine rotationsvariante Verzerrung in den Abtastwerten aufgrund der Interferenzreduktion zu berücksichtigen.

Das erfindungsgemäße Empfängerkonzept hat den Vorteil, daß es ermöglicht, eine Sendevorrichtung zu verwenden, bei der beide Sender im gleichen Frequenzband arbeiten, so daß im Vergleich zu bekannten Konzepten lediglich die halbe Bandbreite des Übertragungskanals benötigt wird. Durch die iterative Interferenz-Reduktion unter Verwendung eines Kanal-Decodierers, der vorzugsweise ein SISO-Decodierer und insbesondere ein BCJR-Decodierer ist, wird die Interferenz an der Empfangsantenne, die üblicherweise ein Sendekonzept mit zwei auf identischen Frequenzen sendenden Sendern verbieten würde, reduziert. Nachdem Komponenten im Empfänger mehrfach verwendet werden können, nämlich für jede Iterationsschleife, ist der Aufwand im Empfänger begrenzt und kostenmäßig und Größenordnung geringer als ein Sende/Empfangskonzept mit verdoppelter Bandbreite.

Ein weiterer Vorteil des erfindungsgemäßen Konzepts ist die schnelle Konvergenz. Bereits nach dem ersten Iterationsschritt werden wesentliche Interferenzreduktionen erhalten. Bereits nach nur zwischen vier und sechs Iterationsschritten wird von Iteration zu Iteration nur noch eine minimale Veränderung in den decodierten Codeeinheiten festgestellt, so daß eine schnelle Konvergenz sichergestellt ist.

Ein weiterer Vorteil der vorliegenden Erfindung besteht darin, daß sämtliche Bearbeitungen im Basisband vorgenommen werden können, so daß keine aufwendigen und teueren Digitalschaltungen oder sogar Analogschaltungen benötigt werden, um die Interferenz-Reduktion etwa im ZF-Band oder im HF-Band durchzuführen, obgleich dies grundsätzlich ebenfalls möglich ist.

Ein weiterer Vorteil der vorliegenden Erfindung besteht darin, daß generell auf bekannte Module zurückgegriffen werden kann, nämlich auf FEC-Codierer und QPSK-Mapper im Sender und QPSK-Demapper, Schätzeinrichtungen und zu dem FEC-Codierer im Sender passende Trellis-Decodierer im Empfänger.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein Blockschaltbild einer erfindungsgemäßen Sen- devorrichtung;

Fig. 2 ein bevorzugtes Ausführungsbeispiel einer Sende- vorrichtung;

Fig. 3 ein Basisbandmodell einer zeitlich kontinuierli- chen Übertragung;

Fig. 4 ein schematisches Blockschaltbild zur Verdeutli- chung einer zeitdiskreten Übertragung;

Fig. 5 ein Blockschaltbild einer erfindungsgemäßen Emp- fangsvorrichtung;

Fig. 6 ein bevorzugtes Ausführungsbeispiel einer Emp- fangsvorrichtung mit Soft-Demapper;

Fig. 7 eine dreidimensionale Darstellung der Übertra- gungsfunktion eines Demappers ohne Seiteninforma- tionen über Real- und Imaginärteil von Abtastwer- ten des Empfangssignals;

Fig. 8 die Wahrscheinlichkeitsdichtefunktion als Funkti- on des Real- und Imaginärteils bei Abtastwerten des Empfangssignals;

Fig. 9 die Übertragungsfunktion des Demappers als Funk- tion von Real- und Imaginärteil für Abtastwerte eines Empfangssignals bei nicht-kreisförmiger Verzerrung, wenn die Pre-Demapping- Wahrscheinlichkeiten für I und Q unterschiedlich sind;

Fig. 10 die Wahrscheinlichkeitsdichtefunktion von empfan- genen Abtastwerten für die Demapping-Funktion von Fig. 11; und

Fig. 11 eine Darstellung der Übertragungsfunktion des De- mappers aufgrund unterschiedlicher Pre-Demapping- Wahrscheinlichkeiten für eine I-Komponente.

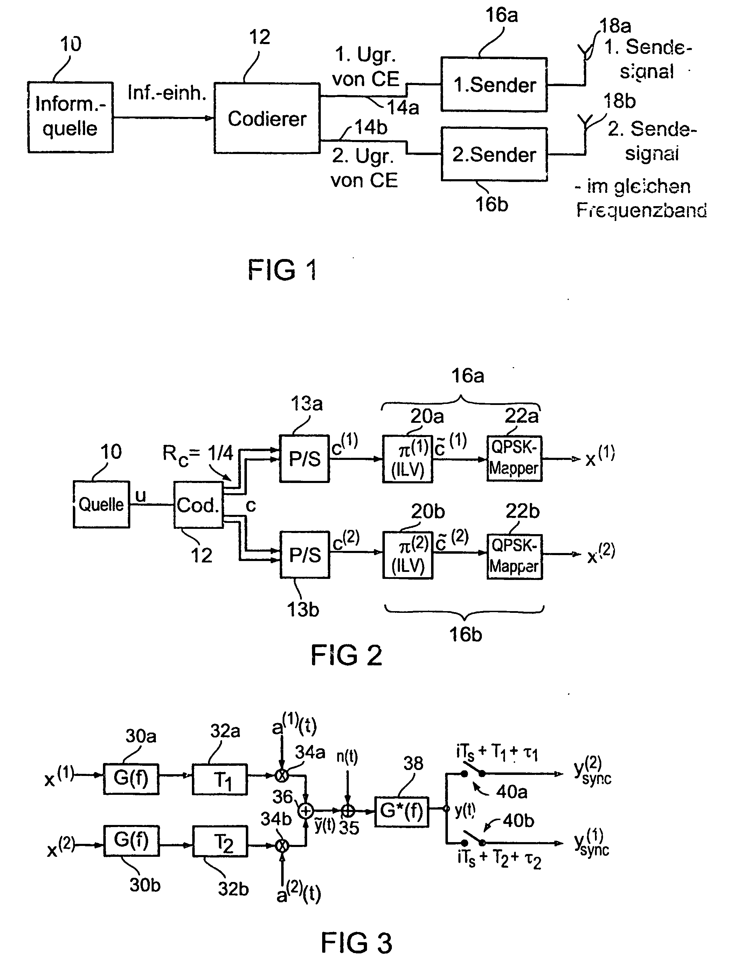

Fig. 1 zeigt eine schematische Darstellung eines erfindungsgemäßen Senders. Eine Informationsquelle 10 stellt ein Informationswort u mit einer Mehrzahl von Informationseinheiten bereit. Dieses Informationswort wird in einen Redundanz-hinzufügenden Codierer 12 eingespeist, der eine Coderate kleiner oder gleich 1/2 hat. Aus dem Informationswort wird durch den FEC-Codierer 12 eine Mehrzahl von Codeeinheiten erzeugt, wobei der Codierer 12 ferner wirksam ist, um die Mehrzahl von Codeeinheiten in zwei Untergruppen von Codeeinheiten aufzuteilen. Eine erste Untergruppe von Codeeinheiten wird an einer ersten Ausgangsleitung 14a des Codierers einem ersten Sender 16a zugeführt, während die zweite Untergruppe von Codeeinheiten an einer zweiten Ausgangsleitung 14b des Codierers einem zweiten Sender 16b zur Verfügung gestellt wird. Der erste Sender 16a ist mit einer ersten Sendeantenne 18a verbunden, um ein erstes Sendesignal abzustrahlen, während der zweite Sender 16b mit einer zweiten Sendeantenne 18b verbunden ist, um ein zweites Sendesignal abzustrahlen. Um eine Space-Diversity-Funktion zu erreichen, sind der erste und der zweite Sender an unterschiedlichen räumlichen Positionen angeordnet. Erfindungsgemäß senden jedoch beide Sender in demselben Frequenzband, so daß sich das erste Sendesignal und das zweite Sendesignal im freien Raum superponieren. Die beiden Sender sind vorzugsweise an unterschiedlichen geostationären Positionen angeordnete Satelliten, während ein Empfänger z. B. ein Rundfunkempfangsgerät in einem sich bewegenden Fahrzeug ist.

Fig. 2 zeigt unter anderem eine bevorzugte Ausführungsform für die erfindungsgemäßen Sender von Fig. 1. Insbesondere wird es bevorzugt, als Codierer 12 einen Codierer mit einer Coderate $R_c$ von 1/4 zu verwenden, derart, daß aus einem Informationswort u mit einer Mehrzahl von Informationseinheiten eine Mehrzahl von Codeeinheiten erzeugt wird, die größer oder gleich dem Vierfachen der Mehrzahl von Informationseinheiten ist. Die Mehrzahl von Code-Einheiten stellt ein Codewort c dar, das in zwei Untergruppen bzw. Untercode-Wörter $c^{(1)}$ und $c^{(2)}$ aufgeteilt wird. Das Informationswort ist vorzugsweise ein binäres Informationswort, das durch den Codierer 12, der als Faltungscodierer ausgebildet ist und einen gegebenen Speicher $\nu$ hat und eine Rate von $R_c$ gleich 1/4 hat, Kanal-codiert wird. Dieser Codierer hört nach der Eingabe von K Informationsbits, also nach einer Eingabe der Mehrzahl von Informationseinheiten in dem 0-Zustand auf, was in anderen Worten bedeutet, daß $\nu$ "nachlaufende" Abschlußbits eingefügt

werden. Somit gibt der Codierer ein Codewort $\mathbf{c} = (c_0, ..., c_{N-1})$ aus, das aus $N = 4 \times \tilde{K}$ Codebits besteht, wobei $\tilde{K} = K + \nu$.

Für jedes Eingangsbit $u_k$ erzeugt der Codierer also vier Codebits $c_n$, die in den Parallel/Seriell-Wandlern 13a, 13b in die Untergruppen oder Unter-Codewörter der Länge N/2 für einen ersten Sender 16a bzw. den zweiten Sender 16b aufgeteilt werden. Jeder Sender umfaßt einen Interleaver 20a bzw. 20b. Diese beiden Interleaver (ILV) sind vorzugsweise als s-Random-Interleaver ausgebildet, um eine Permutation auszuführen, wie sie in S. Dolinar und D. Divsaler, "Weight Distributions for Turbo Codes Using Random and Nonrandom Permutations", JPL-TDA Progreß Report, Bd. 42-122, S. 56-65, 1995, beschrieben sind. Die zwei Bit-Interleaver 20a, 20b permutieren die Vektoren $\mathbf{c}^{(1)}$ und $\mathbf{c}^{(2)}$. Schließlich werden Paare von aufeinanderfolgenden Bits in den permutierten Unter-Codewörtern bzw. Untergruppen von Codeeinheiten in QPSK-Symbole mittels der QPSK-Mapper 22a, 22b umgesetzt. (QPSK = Quaternary Phase Shift Keying). Bei dem in Fig. 2 gezeigten bevorzugten Ausführungsbeispiel der vorliegenden Erfindung wird als Mapping-Vorschrift ein Gray-Mapping eingesetzt, bei dem folgenden Konventionen gelten:

1. Paar von aufeinanderfolgenden Codeeinheiten mit "11": 45°-Zeiger im ersten Quadranten der komplexen Ebene;

2. Paar von aufeinanderfolgenden Codeeinheiten mit "10": 135°-Zeiger im zweiten Quadranten der komplexen Ebene;

3. Paar von aufeinanderfolgenden Codeeinheiten mit "00": 225°-Zeiger im dritten Quadranten der komplexen Ebene; und

4. Paar von aufeinanderfolgenden Codeeinheiten mit "01": 315°-Zeiger im vierten Quadranten der komplexen Ebene.

Das Gray-Mapping ist dahingehend vorteilhaft, daß ein Bit eines Paars von permutierten Codebits für den Imaginärteil steht und das andere Bit für den Realteil steht.

Die beiden QPSK-Mapper 22a, 22b liefern ausgangsseitig Vektoren $\mathbf{x}^{(1)}$ und $\mathbf{x}^{(2)}$ von QPSK-Symbolen, deren Länge gleich $N/4 = \tilde{K}$ beträgt, wobei, wie es bereits ausgeführt worden ist, die Vektoren von QPSK-Symbolen in demselben Frequenzband von den Sendern bzw. Satelliten 1 und 2 (16a bzw. 16b) übertragen werden. Hierzu ist irgendein bekanntes Sender-Front-End vorgesehen, das z. B. eine komplexe Modulation und Aufwärtsmischung auf eine Trägerfrequenz mit den QPSK-Symbolen durchführt.

Die einfachste Art und Weise, um ein Space-Diversity für die Sender zu erhalten, besteht darin, einen Codierer mit einer Rate $R_c$ von 1/2 zu haben, um damit die Codewörter zu duplizieren, was dazu führt, daß die erste Untergruppe von Codeeinheiten und die zweite Untergruppe von Codeeinheiten identisch sind, so daß ebenfalls eine Gesamtcoderate von 1/4 erhalten wird. Dieselben Codebits werden daher zweimal übertragen, wobei aufgrund des Interleavers in den beiden Zweigen der Vektor $\tilde{c}^{(2)}$ im Satelliten eine einfach permutierte Version des entsprechenden Unter-Codeworts zum ersten Satelliten ist.

Erfindungsgemäß wird es jedoch bevorzugt, einen echten Code mit einer Coderate 1/4 zu verwenden, statt einem einfachen Repetition-Code, zumal ein echter Code mit einer Coderate von 1/4 eine höhere Leistungseffizienz als ein einfacher Repetition-Code liefert, da das Erzeugen zusätzlicher Codebits statt des einfachen Duplizierens derselben zu einem höheren Code-Diversity führt.

Bei einem bevorzugten Ausführungsbeispiel der vorliegenden Erfindung ist der Speicher des Faltungscodierers $\nu$ gleich 6. Die Generator-Polynome für einen Code mit maximalem freiem Abstand für $R_c = 1/4$ lauten in oktaler Darstellung $(135_8, 147_8, 135_8, 163_8)$. Es sei darauf hingewiesen, daß die letzten zwei Polynome spiegelbildliche Versionen der ersten beiden Polynome sind. Aus diesem Grund wird es bevorzugt, daß die ersten zwei Polynome der Erzeugung der Codebits für den ersten Satelliten zugeordnet werden, während die letzten beiden Polynome für den Satelliten 2 verwendet werden. Somit haben die Übertragungen über beide Satelliten eine identische Leistungs-Effizienz. Wenn nur ein Satellit betrachtet wird, dann ist der minimale Abstand des Codes gleich 10, was für $R_c = 1/2$ und $\nu = 6$ optimal ist. Wenn Unter-Codewörter (Untergruppen von Codeeinheiten) für beide Satelliten kombiniert werden, dann ist ihr minimaler Abstand gleich 20.

Da erfindungsgemäß beide Satelliten in demselben Frequenzband senden, ist die Gesamtrate der Übertragung R = 1. In der Praxis ist die Gesamtrate aufgrund der zusätzlichen Symbole wegen dem Abschluß des Faltungscodierers etwas kleiner. Insbesondere werden zahlenmäßig betrachtet aus einer Informationseinheit vier Codeeinheiten erzeugt, wobei dann wieder je zwei Codeeinheiten in zwei QPSK-Symbole (vom Sender 1 und vom Sender 2) gruppiert werden, so daß wieder zahlenmäßig betrachtet aus einer Informationseinheit zwei QPSK-Symbole erzeugt werden. Nachdem die beiden QPSK-Symbole von den beiden Sendern auf derselben Frequenz übertragen werden, wird pro Informationseinheit ein Sendevorgang zu einem Zeitpunkt und bei der gleichen Frequenz (jedoch natürlich unter Verwendung beider Sender) durchgeführt, so daß sich konventionsgemäß eine Gesamt-Coderate von 1 bzw. etwas kleiner als 1 ergibt, wie es vorstehend ausgeführt worden ist.

Im nachfolgenden wird anhand von Fig. 3 auf das äquivalente Basisbandmodell der Übertragung im kontinuierlichen Raum Bezug genommen. Unter Verwendung eines Senderfilters G(f) 30a, 30b wird der QPSK-abgebildete Vektor $\mathbf{x}^{(1)}$ bzw. $\mathbf{x}^{(2)}$ der beiden Sender 16a, 16b pulsamplitudenmoduliert. Für die nachfolgenden Erläuterung wird angenommen, daß das Sendefilter ein Square-Root-Nyquist-Filter für eine Symboldauer Ts mit einer reellwertigen Impulsantwort g(t) ist. Der Bruchteil der Ausbreitungsverzögerung zwischen dem Sender und dem Empfänger beträgt $T_1 \in [- 0,5 \times T_s; 0,5 \times T_s]$. Ferner wird angenommen, daß der ganzzahlige Teil der Ausbreitungsverzögerung durch geeignete Maßnahmen genau geschätzt werden kann. Dieser ganzzahlige Teil wird daher aus Einfachheitsgründen der Darstellung ignoriert, indem angenommen wird, daß er immer 0 ist. Auf seinem Weg durch die Atmosphäre erfährt das Sendesignal typischerweise ein frequenzmäßig flaches Rice-Fading mit einem langsam zeitlich variierenden Fading-Koeffizienten $a^{(1)}(t)$. Der Satellit 2 verwendet dasselbe Sendefilter G(f) 30b, wobei jedoch der Bruchteil seiner Ausbreitungsverzögerung zum Empfänger $T_2 \in [-0,5 \times T_s; 0,5 \times T_s]$ beträgt. Auch für den zweiten Satelliten wird ein zweiter langsamer und frequenzmäßig flacher Rice-Fading-Prozeß angesetzt, der vom ersten Fading-Prozeß statistisch unabhängig ist. Die Signale beider Satelliten werden an der Empfangsantenne der erfindungsgemäßen Empfangsvorrichtung kombiniert, wie es durch einen Summierer 36 in Fig. 3 dargestellt ist. Die beiden Filter 30a, 30b stellen somit die Impulsformung im Sender dar, während die beiden Zeitverzögerungsglieder 32a, 32b die Laufzeit des Signals vom ersten Sender zum Empfänger bzw. die Laufzeit des Signals vom zweiten Sender zum Empfänger modellieren. Das Kanal-Fading wird durch die Multiplizierer 34a, 34b modelliert, während der Empfänger gewissermaßen ab dem Summierer 36 beginnt, da der Summierer 36 die Superposition der beiden Sendesignale an der Empfangsantenne der erfindungsgemäßen Empfangsvorrichtung modelliert. Das Empfangssignal $\tilde{y}$ (t) am Ausgang des Summierers 36 kann gleichungsmäßig folgendermaßen dargestellt werden:

$$\tilde{y}(t) = a^{(1)}(t) \cdot \sum_k x^{(1)}[k] \cdot g(t - kT_s - T_1) + a^{(2)}(t) \cdot \sum_k x^{(2)}[k] \cdot g(t - kT_s - T_2) \qquad (1)$$

Zusätzlich zu der Summation, die die Empfangsantenne durchführt, fügt dieselbe auch weißes Gauß'sches Rauschen hinzu (WGN) mit einer einseitigen spektralen Leistungsdichte $N_0$.

Das empfangene Signal wird dann mit einem Empfänger-Impulsformungsfilter 38 mit einer Übertragungsfunktion G*(f) gefiltert, so daß das Ausgangssignal an diesem Empfangsfilter 38 gleichungsmäßig folgendermaßen definiert ist:

$$y(t) \approx a^{(1)}(t) \cdot \sum_k x^{(1)}[k] \cdot \phi_{gg}(t - kT_s - T_1) + a^{(2)}(t) \cdot \sum_k x^{(2)}[k] \cdot \phi_{gg}(t - kT_s - T_2) + n(t) \qquad (2)$$

In dieser Gleichung ist $\phi_{gg}(t)$ die Autokorrelationsfunktion von g(t). Nachfolgend wird angenommen, daß g(t) normiert ist, so daß $\phi_{gg}(0) = 1$ gilt. Der Prozeß n(t), dessen Überlagerung auf das Empfangssignal durch einen Addierer 35 symbolisch dargestellt ist, stellt das gefilterte Rauschen ñ(t) dar, dessen Leistung folgendermaßen gegeben ist:

$$\sigma_n^2 = N_0/T_s \qquad (3)$$

Wie später noch detaillierter ausgeführt wird, versucht der Empfänger nunmehr in zwei Zweigen sich jeweils auf einen entsprechenden Satelliten zu synchronisieren, so daß das Ausgangssignal des Empfängerfilters 36a bei Zeitpunkten $i \times T_s + T_1 + \tau_1$ abgetastet wird, um ein zeitdiskretes Signal für den Satelliten 1 zu erhalten. Analog hierzu wird zu Zeitpunkten $i \times T_s + T_2 + \tau_2$ abgetastet, um ein zeitdiskretes Signal $\mathbf{y}^{(2)}_{sync}$ für den Satelliten 2 zu erhalten. Hier stellen $\tau_1$, $\tau_2$ den Fehler der Symboltaktwiedergewinnung für die beiden Satelliten, also der Synchronisation eines ersten Abtasters 40a und eines zweiten Abtasters 40b, dar. Ohne Einschränkung der Allgemeinheit kann jedoch angenommen werden, daß $\tau_1$, $\tau_2$ viel kleiner als $T_s$, also die Symbolzeitdauer, sind. Daher sind die zwei zeitdiskreten Abtastwerte für jedes Symbolintervall folgendermaßen definiert:

$$y_{sync}^{(1)}[j] \approx a^{(1)}(jT_s) \cdot \sum_k x^{(1)}[k] \cdot \phi_{gg}((j-k)T_s + \tau_1)$$
$$+ a^{(2)}(jT_s) \cdot \sum_k x^{(2)}[k] \cdot \phi_{gg}((j-k)T_s + T_1 - T_2 + \tau_1) \qquad (4)$$

$$y_{sync}^{(2)}[j] \approx a^{(1)}(jT_s) \cdot \sum_k x^{(1)}[k] \cdot \phi_{gg}((j-k)T_s + T_2 - T_1 + \tau_2)$$
$$+ a^{(2)}(jT_s) \cdot \sum_k x^{(2)}[k] \cdot \phi_{gg}((j-k)T_s + \tau_2) \qquad (5)$$

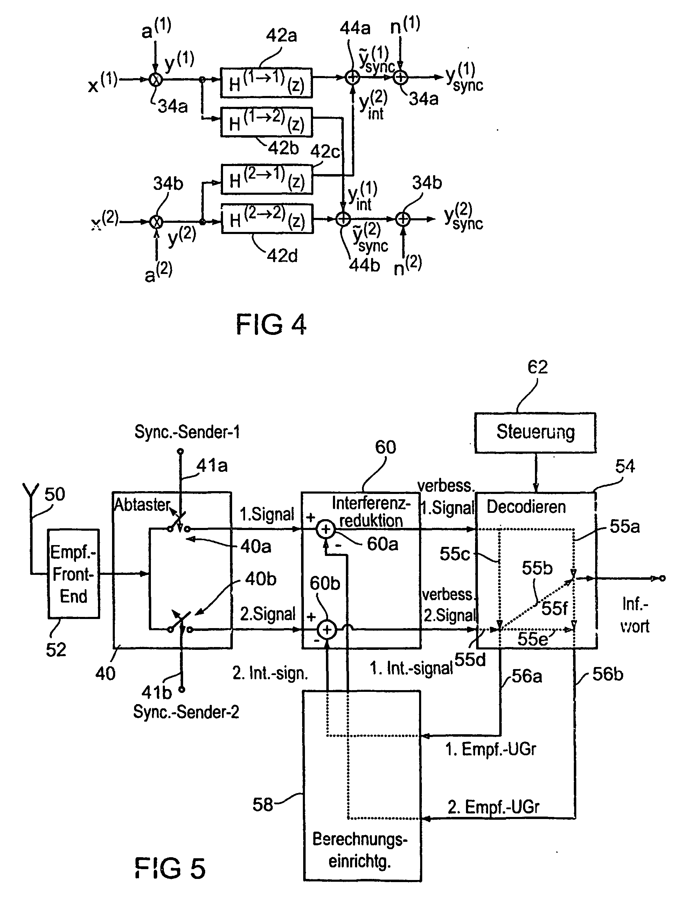

Im nachfolgenden wird aus Darstellungsgründen das zeitkontinuierliche Übertragungsmodell durch ein zeitdiskretes Übertragungsmodell ersetzt, wie es in Fig. 4 dargestellt ist. Die Übertragungsverzögerungen $T_1$, $T_2$ (32a, 32b) von Fig. 3 werden zusammen mit eventuellen Synchronisationsfehlern der Abtaster 40a, 40b in vier in Fig. 4 gezeigten Filtern 42a-42d modelliert.

Die QPSK-Symbole in dem Vektor $\mathbf{x}^{(1)}$ werden mit den jeweiligen Elementen des Vektors $\mathbf{a}^{(1)}$ multipliziert, was dem langsamen und frequenzmäßig flachen Rice-Fading-Prozeß entspricht. Analog werden die Elemente von $\mathbf{x}^{(2)}$ elementweise mit den Fading-Koeffizienten in $\mathbf{a}^{(2)}$ multipliziert. Die resultierenden Vektoren $\mathbf{y}^{(1)}$ und $\mathbf{y}^{(2)}$ werden dann mit den vier Filtern 42a-42d gefiltert, wie es in Fig. 4 gezeigt ist. Die jeweiligen Impulsantworten dieser Filter lauten folgendermaßen:

$$h^{(1 \to 1)}[l] = \phi_{gg}(lT_s + \tau_1) \qquad (6)$$

$$h^{(2 \to 1)}[l] = \phi_{gg}(lT_s + T_1 - T_2 + \tau_1) \qquad (7)$$

$$h^{(1 \to 2)}[l] = \phi_{gg}(lT_s + T_2 - T_1 + \tau_2) \qquad (8)$$

$$h^{(2 \to 2)}[l] = \phi_{gg}(lT_s + \tau_2) \qquad (9)$$

Für die nachfolgenden Betrachtungen wird der Einfachheit halber angenommen, daß die Ausbreitungsverzögerung $T_1$, $T_2$ während der Übertragung von einem Informationswort konstant sind, daß jedoch die Synchronisationsfehler $\tau_1$, $\tau_2$ während der Übertragung langsam variieren können, so daß tatsächlich Sequenzen $\tau_1[j]$, $\tau_2[j]$ auftreten können.

Das Filtern von $\mathbf{y}^{(1)}$ mit $H^{(1 \to 1)}(z)$ oder $\mathbf{y}^{(2)}$ mit $H^{(2 \to 2)}(z)$ berücksichtigt die möglicherweise nicht optimale Übereinstimmung zwischen der geschätzten und der tatsächlichen Symbolphase, d. h. berücksichtigt Fehler in der Synchronisation der Abtaster 40a, 40b auf den ersten Sender bzw. den zweiten Sender. Wenn die Phasen korrekt geschätzt sind, d. h. wenn eine optimale Synchronisation vorhanden ist und $\tau_1 = \tau_2 = 0$ ist, dann sind die Übertragungsfunktionen dieser Filter gleich 1.

Die Filter $H^{(2 \to 1)}(z)$ und $H^{(1 \to 2)}(z)$ stellen die Interferenz des Signals des Satelliten in den Abtastwerten, die synchronisiert auf dem Satelliten 1 abgetastet worden sind, und umgekehrt dar. Diese Filter werden hauptsächlich durch die Differenz $T_1 - T_2$ der Ausbreitungsverzögerung von beiden Satelliten zur Empfangsvorrichtung bestimmt. Die Ausgangssignale dieser Filter sind die Vektoren $\mathbf{y}_{int}^{(2)}$ und $\mathbf{y}_{int}^{(1)}$ der Interferenzabtastwerte.

Die Ausgangssignale dieser Filter stellen also die Interferenzsignale dar, die während der tatsächlichen Übertragung auftreten und, wie später ausgeführt wird, durch die erfindungsgemäße Empfangsvorrichtung geschätzt werden, um mit den geschätzten Interferenzsignalen eine Interferenzreduktion in dem iterativen Empfangsverfahren gemäß der vorliegenden Erfindung durchzuführen.

Die Überlagerung der Interferenzsignale zu den "Nutzsignalen" wird in Fig. 4 durch Addierer 44a, 44b symbolisiert.

Am Ausgang der Addierer 44a, 44b liegen somit - jedoch in zeitdiskreter Darstellung - dieselben Signale an wie am Ausgang der Abtaster 40a, 40b von Fig. 3, jedoch ohne das weiße Rauschen der Empfangsantenne, das durch die Addierer 34a, 34b hinzugefügt wird. Zur Vereinfachung kann angenommen werden, daß die Rauschvektoren $\mathbf{n}^{(1)}$ und $\mathbf{n}^{(2)}$ nicht miteinander korreliert sind, und daß die Varianz aller Rauschabtastwerte $\sigma_n^2 N_0/T_s$ ist. Am Ausgang der Addierer 34a, 34b liegen somit ein erstes Empfangssignal $\mathbf{y}_{sync}^{(1)}$ das das durch Interferenz gestörte Empfangssignal von dem ersten Sender ist, und ein zweites Empfangssignal $\mathbf{y}_{sync}^{(2)}$ das das durch Interferenz gestörte auf den zweiten Sender synchronisierte Empfangssignal ist.

Nachfolgend wird anhand des in Fig. 5 gezeigten Blockschaltbilds eine erfindungsgemäße Empfangsvorrichtung beschrieben. Die Empfangsvorrichtung umfaßt eine Empfangsantenne 50 und irgendein bekanntes Empfänger-Front-End 52, um eine Umsetzung des HF-Empfangssignals von der Antenne 50 in das Basisband zu bewerkstelligen. Das Ausgangssignal des Empfänger-Front-Ends 52 wird einer Abtasteinrichtung 40 zugeführt, die den ersten Abtaster 40a und den zweiten Abtaster 40b umfaßt. Der erste Abtaster 40a wird hinsichtlich seiner Abtastzeitpunkte mittels eines Synchronisationssignals 41a gesteuert, um eine auf den ersten Sender 16a von Fig. 1 synchronisierte Abtastung zu erreichen. Analog hierzu wird der zweite Abtaster durch ein Synchronisationssignal 41b gesteuert, um eine auf den zweiten Sender 16b von Fig. 1 synchronisierte Abtastung des Empfangssignals zu erhalten. Am Ausgang des Abtasters 40a liegt ein erstes Empfangssignal vor, das jedoch durch Interferenzen von dem zweiten Sender gestört ist, wie es anhand von Fig. 4 erläutert worden ist. Analog hierzu liegt am Ausgang des zweiten Abtasters ein zweites Empfangssignal vor, das jedoch durch Interferenzen von dem ersten Sender gestört ist.

In einem gewissermaßen 0-ten Iterationsdurchgang wird das erste Empfangssignal am Ausgang des ersten Abtasters 40a einer Decodiereinrichtung 54 zugeführt. Darüber hinaus wird auch das zweite Empfangssignal der Decodiereinrichtung 54 zugeführt, um eine erste Empfangs-Untergruppe an einem ersten Ausgang 56a zu liefern, die der ersten Untergruppe von Codeeinheiten auf der Leitung 14a der Sendevorrichtung von Fig. 1 zugeordnet ist. Darüber hinaus liefert der Decodierer 54 ausgangsseitig auf einer zweiten Ausgangsleitung 56b eine zweite Empfangs-Untergruppe von Codeeinheiten, die der zweiten Untergruppe von Codeeinheiten auf der Leitung 14b der Sendevorrichtung von Fig. 1 zugeordnet ist. Es wird jedoch darauf hingewiesen, daß in diesem gerade beschriebenen "0-ten Iterationsdurchgang" die Empfangs-Untergruppe und die zweite Empfangs-Untergruppe auf den Leitungen 56a, 56b nicht exakt der ersten Sende-Untergruppe und der zweiten Sende-Untergruppe von Codeeinheiten entsprechen, sondern aufgrund der Interferenz, die vorhanden ist, da der erste und der zweite Sender 16a, 16b von Fig. 1 auf derselben Trägerfrequenz senden, gestört sind.

Erfindungsgemäß werden erste Empfangs-Untergruppe und die Interferenz-gestörte zweite Empfangs-Untergruppe einer Berechnungseinrichtung 58 zugeführt, um ein erstes Interferenzsignal auf der Basis der zweiten Empfangsuntergruppe zu berechnen, und um ein zweites Interferenzsignal auf der Basis der ersten Empfangsuntergruppe zu berechnen. Sowohl das erste Interferenzsignal als auch das zweite Interferenzsignal werden einer Interferenzreduktionseinrichtung 60 zugeführt und von dem ersten Empfangssignal am Ausgang des ersten Abtasters bzw. von dem zweiten Empfangssignal am Ausgang des zweiten Abtasters subtrahiert, wie es durch Subtrahierer 60a, 60b in Fig. 1 schematisch dargestellt ist.

Eine Steuerungseinrichtung 62 ist mit dem Decodierer 54 verbunden, um die Decodierungseinrichtung 54 zu steuern, damit dieselbe ein aus der Interferenzreduktionseinrichtung 60 ausgegebenes verbessertes erstes Empfangssignal und ein aus der Interferenzreduktionseinrichtung 60 ausgegebenes verbessertes zweites Empfangssignal decodiert und basierend auf dem verbesserten ersten Empfangssignal und dem verbesserten zweiten Empfangssignal ausgangsseitig das den Empfangssignalen zugrundeliegende Informationswort mit der Mehrzahl von Informationseinheiten ausgibt. Die Steuerung 62 ist ferner wirksam, um zu entscheiden, ob bereits eine Iteration ausreichend ist, oder ob einer oder mehrere Iterationsschritte folgen sollen.

Soll keine weitere Iteration erfolgen, d. h. ist ein vorbestimmtes Abbruchkriterium erfüllt, so wird unmittelbar unter Verwendung des decodierten verbesserten ersten Signals und des decodierten verbesserten zweiten Signals, wie es durch zwei gestrichelte Pfeile 55a, 55b dargestellt ist, das Informationswort mit der Mehrzahl von Informationseinheiten ausgegeben.

Soll dagegen ein weiterer Iterationsschritt folgen, so wird aus dem verbesserten ersten Signal und dem verbesserten zweiten Signal die erste Empfangs-Untergruppe ermittelt, wie es durch gestrichelte Pfeile 55d und 55c dargestellt ist, und wird unter Verwendung des verbesserten ersten Signals und des verbesserten zweiten Signals, wie es durch Pfeile 55e und 55f dargestellt ist, die zweite Empfangs-Untergruppe berechnet.

Hieraus werden durch die Berechnungseinrichtung 58 wieder ein nun jedoch verbessertes erstes Interferenzsignal und verbessertes zweites Interferenzsignal ermittelt und erneut in der Interferenz-Reduktionseinrichtung von dem ersten Empfangssignal bzw. von dem zweiten Empfangssignal subtrahiert, um am Ausgang der Interferenzreduktions-Einrichtung für diesen Iterationsschritt ein weiter verbessertes erstes Signal und weiter verbessertes zweites Signal zu ermitteln.

Bestimmt die Steuerung 62 nun, daß die Iteration abgebrochen werden soll, da das vorbestimmte Iterationsabbruchkriterium erfüllt ist, so wird das Informationswort unmittelbar unter Verwendung des weiter verbesserten ersten Signals und weiter verbesserten zweiten Signals decodiert und ausgegeben. Auch für die zweite Iteration wird das Informationswort somit zwar unmittelbar unter Verwendung des weiter verbesserten ersten Signals und des weiter verbesserten zweiten Signals berechnet, jedoch nach wie vor auf der Basis des bei der ersten Iteration erhaltenen verbesserten ersten Signals und verbesserten zweiten Signals ermittelt, zumal das weiter verbesserte erste Signal und das weiter verbesserte zweite Signal auf dem verbesserten ersten Signal bzw. verbesserten zweiten Signal basieren.

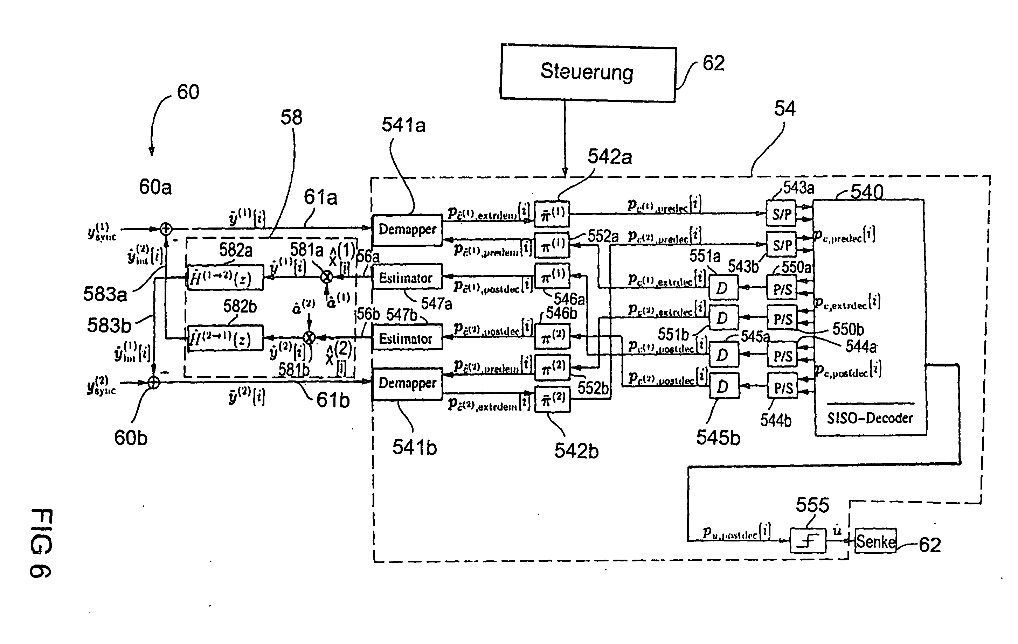

Im nachfolgenden wird anhand von Fig. 6 ein bevorzugtes Ausführungsbeispiel der in Fig. 5 gezeigten Empfangsvorrichtung dargestellt. Gleiche Bezugszeichen bedeuten gleiche Elemente. Der Übersichtlichkeit halber ist in Fig. 6 im Vergleich zu Fig. 5 der Abtaster 40 nicht gezeigt. Das erste Empfangssignal $\mathbf{y}^{(1)}_{sync}$ bzw. das zweite Empfangssignal $\mathbf{y}^{(2)}_{sync}$ werden in einem 0-ten Iterationsdurchgang an den Interferenz-Reduktions-Addierern 60a, 60b in die Decodiereinrichtung 54 eingespeist, die in Fig. 6 gestrichelt dargestellt ist.

Der Empfänger von Fig. 6 ist ausgebildet, um Empfangssignale, die auf der Basis von Sendesignalen von dem in Fig. 2 gezeigten Sender erzeugt worden sind, zu empfangen und zu decodieren. Zu diesem Zweck umfaßt die Decodiereinrichtung 54 für jeden Empfangszweig einen Demapper 541a, 541b. Der Demapper erhält eingangsseitig komplexe Abtastwerte, wie z. B. Spannungswerte, die in dem Demapper 541a, 541b in extrinsische Demapping-Wahrscheinlichkeiten umgesetzt werden. Der komplexe Abtastwert, der ein Modulationssymbol y darstellt, wird somit in zwei extrinsische Demapping-Wahrscheinlichkeiten durch den Demapper beispielsweise 541a umgesetzt, wobei die zwei Wahrscheinlichkeiten dafür stehen, ob die zwei Codeeinheiten, die zusammen das untersuchte QPSK-Symbol ergeben, jeweils eine 0 oder eine 1 sind. Auf die Bedeutung von extrinsischen Wahrscheinlichkeiten wird weiter unten eingegangen. Generell genügt es, lediglich die Wahrscheinlichkeiten anzugeben, ob eine Codeeinheit eine 1 ist, da sich die Wahrscheinlichkeit, ob die Codeeinheit eine 0 ist, unmittelbar aus der Wahrscheinlichkeit, daß die Codeeinheit eine 1 ist, ergibt. Eingangsseitig wird in den Demapper 541a somit ein Vektor von komplexen Abtastwerten eingespeist, während ausgangsseitig ein doppelt so langer Vektor für Wahrscheinlichkeiten von Codeeinheiten erhalten wird.

Der Vektor von extrinsischen Demodulations-Wahrscheinlichkeiten am Ausgang des Demappers 541a bzw. 541b wird dann in einen De-Interleaver 542a bzw. 542b eingespeist, um die im Sendern durchgeführte Permutation (Elemente 20a, 20b von Fig. 2) wieder rückgängig zu machen. Am Ausgang der De-Interleaver 542a bzw. 542b ergibt sich somit ein Vektor aus Pre-Decodier-Wahrscheinlichkeiten, der die gleiche Länge hat wie der Vektor am Eingang der Einrichtungen 542a bzw. 542b.

In einem Seriell/Parallel-Wandler werden immer zwei aufeinanderfolgende Komponenten des Vektors für die Pre-Decodier-Wahrscheinlichkeiten gruppiert (543a bzw. 543b). Am Ausgang der Seriell/Parallel-Wandler 543a bzw. 543b liegen somit bei dem gezeigten Ausführungsbeispiel die Pre-Decodier-Wahrscheinlichkeiten für die erste Empfangs-Untergruppe von Codeeinheiten (Einrichtung 543a) und die zweite Empfangs-Untergruppe von Codeeinheiten (543b) an.

Die erste und die zweite Empfangs-Untergruppe bzw., wenn mit Wahrscheinlichkeiten gerechnet wird, die Wahrscheinlichkeiten für die Codeeinheiten in diesen Untergruppen werden in einen Trellis-Decodierer eingespeist, der bei dem in Fig. 6 gezeigten bevorzugten Ausführungsbeispiel der vorliegenden Erfindung ein SISO-Decodierer ist, der nach dem BCJR-Algorithmus (BCJR = Bahl Cocke Jelinek Raviv) arbeitet, der in "Optimal Decoding of Linear Codes for Minimizing Symbol Error Rate", IEEE Transactions on Information Theory, S. 284-287, 1974, detailliert beschrieben ist.

Ein solchermaßen gestalteter Decodierer liefert als Beispiel für einen Soft-In-Soft-Out-Decodierer eine decodierte erste Empfangs-Untergruppe von Codeeinheiten, die in einen Parallel/Seriell-Wandler 544a eingespeist wird, und eine decodierte zweite Empfangs-Untergruppe von Codeeinheiten, die in den Parallel/Seriell-Wandler 544b eingespeist wird, um die parallele Ausgabe des SISO-Decodierers seriell zu machen. Es sei darauf hingewiesen, daß anstatt des SISO-Decodierers vom BCJR-Typ auch andere bekannte Soft-In-Soft-Out-Decodierer verwendet werden können. Darüber hinaus ist es nicht wesentlich, daß überhaupt Soft-Decodierer eingesetzt werden. Alternativ können auch Decodierer eingesetzt werden, die nicht mit Wahrscheinlichkeiten rechnen, sondern bei denen bereits der Demapper eine harte 0/1-Entscheidung durchführt.

Das erfindungsgemäße Konzept ist jedoch für eine Soft-Decodierung besonders geeignet, derart, daß der bevorzugte Demapper eine Umsetzung von Abtastwerten nicht in Codeeinheiten an sich sondern in Wahrscheinlichkeiten für Codeeinheiten durchführt. Prinzipiell ist es jedoch gleichwertig, ob mit den Codeeinheiten an sich oder mit den Wahrscheinlichkeiten für die Codeeinheiten gerechnet wird. Daher wird, wenn nichts anderes gesagt ist, hierin im nachfolgenden, wenn von Codeeinheiten gesprochen wird, auch gleichzeitig auf Wahrscheinlichkeiten für Codeeinheiten Bezug genommen.

Nachdem die Interferenzreduktionsvorgehensweise iterativ ist, sind in Fig. 6 Verzögerungsglieder 545a, 545b eingezeichnet, die symbolisieren sollen, daß die Post-Decodier-Wahrscheinlichkeiten für die erste und zweite decodierte Empfangs-Untergruppe von Codeeinheiten für eine weitere Verarbeitung erst im nächsten Iterationsschritt zur Verfügung stehen. Der Vektor von Post-Decodier-Wahrscheinlichkeiten für einen bestimmten Iterationsschritt i, wird wieder einer Interleaving-Operation mittels Interleaver 546a, 546b unterzogen, um permutierte Post-Decodier-Wahrscheinlichkeiten zu erhalten, die jeweils in einer Schätzeinrichtung, die in Fig. 6 mit Estimator bezeichnet ist, eingespeist werden, um aus den Wahrscheinlichkeiten für die erste und die zweite Empfangs-Untergruppe von Codeeinheiten wieder komplexe Abtastwerte zu erhalten, die von ihrem Wesen den Abtastwerten am Eingang in den Demapper 541a bzw. 541b entsprechen. Die Ausgangssignale am Ausgang der Estimator 547a, 547b stellen somit wieder komplexe 4-wertige Symbole dar. Die Estimatoren können somit als "weiche" QPSK-Mapper angesehen werden, jedoch mit dem Unterschied, daß die QPSK-Mapper von Fig. 2 eingangsseitig tatsächlich Bits erhalten, während die Estimator 547a, 547b in Fig. 6 eingangsseitig Wahrscheinlichkeiten für Bits erhalten.

Die Ausgangsleitungen der Estimator 547a, 547b von Fig. 6 entsprechen somit den Leitungen 56a bzw. 56b von Fig. 5. Der Decodierer 54, der in Fig. 5 prinzipiell dargestellt ist, enthält somit, wenn Fig. 5 und Fig. 6 verglichen werden, das Demappen, das De-Interleaven, das SISO-Decodieren, das Interleaven der Post-Decodier-Wahrscheinlichkeiten und die Funktionalität der Estimator 547a, 547b.

Insofern ist es gleichwertig, ob die erste Empfangs-Untergruppe von Codeeinheiten am Ausgang der Decodiereinrichtung 54 wie in Fig. 6 als QPSK-Symbol vorliegt oder, wenn eine andere Modulation eingesetzt wird, als anderes Modulationssymbol oder, wenn keine Modulation eingesetzt wird, als direkte Untergruppe von Codeeinheiten. Für Fachleute ist es erkennbar, daß die Art der Modulation nicht für das erfindungsgemäße Interferenzreduktionskonzept wesentlich ist, obgleich die QPSK-Modulation/Demodulation bevorzugt wird.

Die erste und zweite Empfangs-Untergruppe von Codeeinheiten, die die Decodiereinrichtung 54 ausgibt, kann somit entweder als direkte Empfangs-Untergruppe mit tatsächlich zwei oder mehreren voneinander getrennten Codeeinheiten vorliegen oder, wie es in Fig. 6 der Fall ist, als Empfangs-Untergruppe von Codeeinheiten, wobei die Untergruppe jedoch als Symbol realisiert ist, das von den beiden oder mehreren Codeeinheiten der Untergruppe abhängt, wobei das Symbol in Fig. 6 ein "weiches" QPSK-Symbol am Ausgang des Estimators 547a bzw. 547b ist.

Die Berechnungseinrichtung 58, wie sie in Fig. 5 gezeigt ist, umfaßt bei dem in Fig. 6 gezeigten bevorzugten Ausführungsbeispiel Multiplizierer 581a, 581b, um das Kanal-Fading zu berücksichtigen, und zwar für beide Zweige. Darüber hinaus umfaßt die Berechnungseinrichtung die durch die zeitdiskrete Darstellung eingeführten Übertragungsfunktionen 582a, 582b, die Intersymbol-Interferenzen durch die Nicht-Synchronität des Interferenzsignals zum Empfangssignal zu berücksichtigen. In der Interferenzreduktionseinrichtung, in der das erste Interferenzsignal auf einer Leitung 583a dem Addierer 60a zugeführt wird, während das zweite Interferenzsignal auf einer Leitung 583b dem zweiten Addierer 60b zugeführt wird, werden verbesserte erste und zweite Empfangssignale auf den Eingangsleitungen 61a bzw. 61b in die Decodiereinrichtung 54 erzeugt.

Bei dem in Fig. 6 gezeigten bevorzugten Ausführungsbeispiel der vorliegenden Erfindung sind der Demapper 541a und der Demapper 541b als spezielle Demapper ausgeführt, welche die Demapping-Funktion unter Verwendung von Seiteninformationen durchführen. Die Seiteninformationen werden ebenfalls aus dem SISO-Decodierer geliefert und werden in Fig. 6 als extrinsische Decodierwahrscheinlichkeiten $\mathbf{p}_{c,extrdec}[i]$ bezeichnet.

Die extrinsischen Decodierwahrscheinlichkeiten werden sowohl für den ersten Zweig (1) als auch für den zweiten Zweig (2) aus den Post-Decodier-Wahrscheinlichkeiten auf bekannte Art und Weise ermittelt. Die Ermittlung der extrinsischen Decodierwahrscheinlichkeiten aus den Post-Decodier-Wahrscheinlichkeiten für die erste und die zweite Untergruppe von Codeeinheiten ist in der Technik bekannt. Hierzu wird auf Joachim Hagenauer, Elke Offer und Lutz Papke, "Iterative Decoding of Binary Block and Convolutional Codes", IEEE Trans. Inform. Theory, Seiten 429 - 437, 1996, verwiesen.

Die extrinsischen Decodierwahrscheinlichkeiten werden einem ersten Parallel/Seriell-Wandler 550a für den ersten Zweig bzw. einem zweiten Parallel/Seriell-Wandler 550b für den zweiten Zweig zugeführt und ebenfalls, wie es vorstehend hinsichtlich der Delays 545a, 545b beschrieben worden ist, mittels Verzögerungseinrichtungen 551a bzw. 551b verzögert, um anzudeuten, daß es sich hier um eine Iterationsschleife handelt. Die extrinsischen Decodierwahrscheinlichkeiten werden dann in Interleavern 552a permutiert, und zwar gemäß derselben Vorschrift, wie sie in den Interleavern 546a bzw. 546b oder in den in Fig. 2 gezeigten Interleavern durchgeführt wird. Die permutierten extrinsischen Decodierwahrscheinlichkeiten, die nunmehr, wie es aus Fig. 6 ersichtlich ist, als Pre-Demapping-Wahrscheinlichkeiten bezeichnet werden, werden dann den Demappern 541a, 541b als Seiteninformationen zugeführt, um die Demapping-Funktion im Vergleich zu einem Demapper ohne Seiteninformationen zu verbessern, um letztendlich eine bessere Bitfehlerrate am Ausgang des Decodierers zu erreichen.

Wenn die Steuerung 62 festgestellt hat, daß ein Iterations-Abbruchkriterium erfüllt ist, so wird sie den SISO-Decodierer 540 ansteuern, um Post-Decodier-Wahrscheinlichkeiten für die einzelnen Informationseinheiten an einem Ausgang auszugeben. Die Post-Decodier-Wahrscheinlichkeiten werden dann einem Schwellwertentscheider 555 zugeführt, um das decodierte Informationswort $\hat{\mathbf{u}}$ zu erhalten, das schließlich in eine Informationssenke 62 eingespeist wird.

Im nachfolgenden wird detaillierter auf die Funktionsweise der in Fig. 6 gezeigten bevorzugten Decodiervorrichtung eingegangen.

Aus den vorstehenden Gleichungen (4) und (5) ist zu sehen, daß sehr starke Interferenzen von Satellit 2 auftreten können, wenn sich der Abtaster 40 auf den Satelliten 1 synchronisiert (41a), und umgekehrt. Insbesondere können die Impulsantworten $h^{(2\rightarrow1)}[1]$ und $h^{(1\rightarrow2)}[1]$ bei der Erzeugung des Interferenzsignals sehr lang sein. Erfindungsgemäß wird daher das Interferenzsignal geschätzt und mit dem entsprechenden Empfangssignal kombiniert, um durch die Einrichtung 60 eine Interferenzreduktion zu erreichen. Bemerkenswert ist, daß die Komplexität der erfindungsgemäßen Technik fast unabhängig von der Länge der Impulsantwort des Interferenzerzeugenden Signals ist.

Wie es bereits ausgeführt worden ist, ist der Decodierer 540 von Fig. 6 als Soft-in/Soft-out-Kanaldecodierer (SISO-Decodierer) ausgebildet, der vorzugsweise den BCJR-Algorithmus verwendet, um sogenannte Soft-Schätzwerte für das Interferenzsignal zu erhalten. Alternativ kann jedoch jeglicher andere Trellis-Decodierer eingesetzt werden, der das erste und das zweite Empfangssignal decodieren kann, um eine erste Empfangs-Untergruppe von Codeeinheiten, die der ersten Sende-Untergruppe von Codeeinheiten zugeordnet ist, und eine zweite Empfangs-Untergruppe von Codeeinheiten, die der zweiten Sende-Untergruppe von Codeeinheiten zugeordnet ist, zu erhalten. Vorzugsweise wird irgendein SISO-Decodierer verwendet, der aus Pre-Decodier-Wahrscheinlichkeiten für die erste und die zweite Empfangs-Untergruppe Post-Decodier-Wahrscheinlichkeiten für die erste und die zweite Empfangs-Untergruppe liefern kann.

Insbesondere wird in einer Iterationsstufe i der Empfängeriteration die Ausgabe des Decodierers von der (i - 1)-ten Iteration für die Interferenzreduktion verwendet. Bezüglich der Notation dieser Anmeldung sei darauf hingewiesen, daß der letzte Index einer Variable, die für den Empfänger verwendet wird, die Iteration bezeichnet, in der die Variable berechnet worden ist. Es sei angenommen, daß der KanalDecodierer Post-Decodier-Wahrscheinlichkeiten in der Iteration i - 1 berechnet hat, wobei $p_{c,postdec}[k][i - 1]$ die Wahrscheinlichkeit darstellt, daß das übertragene Codebit $c[k]$ gleich 1 ist. Aus Anschaulichkeitsgründen, jedoch ohne Einschränkung der Allgemeinheit wird nachfolgend immer die Wahrscheinlichkeit eines Ereignisses betrachtet, dahingehend, daß das jeweilige Bit eine logische 1 ist.

Der SISO-Decodierer hat ferner die zugeordneten extrinsischen Wahrscheinlichkeiten $\mathbf{p}_{c,extrdec}[i - 1]$ für die Bits in dem Codewort $\mathbf{c}$ berechnet. Genauso wie im Codierer werden sowohl die Post-Decodier-Wahrscheinlichkeiten als auch die extrinsischen Wahrscheinlichkeiten in zwei Ströme bzw. Untergruppen aufgeteilt und parallel/seriell gewandelt, so daß die Vektoren $p_{c(1),postdec}[i]$ und $p_{c(2),postdec}[i]$ der Post-Decodier-Wahrscheinlichkeiten für die Bits in den Codewörtern $\mathbf{c}^{(1)}$ und $\mathbf{c}^{(2)}$ der Satelliten 1 bzw. 2 erhalten werden. Dasselbe wird für die zugeordneten extrinsischen Wahrscheinlichkeiten erhalten, so daß entsprechende Vektoren mit extrinsischen Wahrscheinlichkeiten entstehen. Beide Vektoren werden durch die in Fig. 6 dargestellten entsprechenden Interleaver permutiert.

Die Notation $p_{\tilde{c}^{(1)},predem}[i]$ und $p_{\tilde{c}^{(2)},predem}[i]$ wurde verwendet, da diese extrinsischen Wahrscheinlichkeiten, die von dem Decodierer berechnet worden sind, als Pre-Demapping-Wahrscheinlichkeiten verwendet werden. Die Post-Decodier-Wahrscheinlichkeiten für die permutierten Codebits können nun verwendet werden, um die Vektoren $\mathbf{x}^{(1)}$ und $\mathbf{x}^{(2)}$ der übertragenen QPSK-Symbole zu rekonstruieren.

Da der Decodierer nicht alle übertragenen Codesymbole $c_k$ zuverlässig identifizieren kann, werden Soft-Schätzwerte

$$\hat{\mathbf{x}}^{(1)}[i] = \left(\hat{x}^{(1)}[0][i],...,\hat{x}^{(1)}[\widetilde{K} - 1][i]\right)$$

und

$$\hat{\mathbf{x}}^{(2)}[i] = \left(\hat{x}^{(2)}[0][i],...,\hat{x}^{(2)}[\widetilde{K} - 1][i]\right)$$

der Vektoren $\mathbf{x}^{(1)}$ und $\mathbf{x}^{(2)}$ verwendet, bei denen die Zuverlässigkeit der Ausgabe des Decodierers berücksichtigt ist. Um den Schätzfehler im Sinne des MMSE (MMSE = Minimum Mean Squared Error = minimaler mittlerer quadratischer Fehler) zu minimieren, werden die Soft-Schätzwerte folgendermaßen berechnet:

$$\mathbf{x}^{(1)}[i] = E\left[\mathbf{x}^{(1)} \mid p_{\tilde{c}^{(1)},postdec}[i]\right] \quad \text{und} \qquad (10)$$

$$\mathbf{x}^{(2)}[i] = E\left[\mathbf{x}^{(2)} \mid p_{\tilde{c}^{(2)},postdec}[i]\right] \qquad (11)$$

Hier bedeutet

$$E\left[ x^{(1)} \mid p_{\tilde{c}^{(1)},postdec}[i] \right]$$

den Erwartungswert über $\mathbf{x}^{(1)}$, während der Vektor

$$p_{\tilde{c}^{(1)},postdec}[i] = \left( p_{\tilde{c}^{(1)},postdec}[0][i],...,p_{\tilde{c}^{(1)},postdec}[N/2-1][i] \right)$$

die Wahrscheinlichkeiten enthält, daß folgendes für das permutierte Codebit gilt: $\tilde{c}^{(1)}[k]=1$ für $k=0,...,N/2-1$

Diese Soft-Schätzwerte, die von dem Estimator 547a bzw. 547b berechnet werden, können nun verwendet werden, um die Interferenz in den Vektoren aus Abtastwerten $y_{sync}^{(1)}$ und $y_{sync}^{(2)}$ für die Signale zu reduzieren, die auf die zwei Satelliten synchronisiert sind. Zu diesem Zweck werden zunächst die Interferenzsignale $y_{int}^{(1)}$ und $y_{int}^{(2)}$ rekonstruiert, indem $x^{(1)}[i]$ oder $x^{(2)}[i]$ elementweise mit den geschätzten Fading-Koeffizienten $\hat{a}^{(1)}$ bzw. $\hat{a}^{(2)}$ multipliziert werden. Dann werden die erhaltenen Ergebnisse $y^{(1)}[i]$ und $y^{(2)}[i]$ jeweils mit $H^{(1\rightarrow2)}(z)$ und $H^{(2\rightarrow1)}(z)$ gefiltert. Diese Filter stellen die Schätzwerte des Empfängers für die Filter $H^{(1\rightarrow2)}(z)$ und $H^{(2\rightarrow1)}(z)$ dar, die in dem in Fig. 4 gezeigten zeitdiskreten Übertragungsmodell für die Interferenz verantwortlich sind. Daher haben diese Filter folgende Impulsantworten:

$$\hat{h}^{(1\rightarrow2)}[l]=\phi_{gg}(lT_s+T_2-T_1+\tau_2-\tau_1) \tag{12}$$

$$\hat{h}^{(2\rightarrow1)}[l]=\phi_{gg}(lT_s+T_1-T_2+\tau_1-\tau_2) \tag{13}$$

Da die Impulsantwort g(t) des Sendefilters reellwertig ist, gilt: $\phi_{gg}(-t)=\phi_{gg}(t)$. Daher gilt ferner: $\hat{h}^{(2\rightarrow1)}[l]=\hat{h}^{(1\rightarrow2)}[-l]$ und dementsprechend $H^{(2\rightarrow1)}(z)=H^{(1\rightarrow2)}(l/z)$. Die Ausgangssignale $y_{int}^{(1)}[i]$ und $y_{int}^{(2)}[i]$ der zwei Filter, d. h. die Schätzwerte für die Interferenzsignale $y_{int}^{(1)}$ und $y_{int}^{(2)}$, können nun von den Empfangssignalen $y_{sync}^{(1)}$ und $y_{sync}^{(2)}$ subtrahiert werden, welche auf die zwei Satelliten synchronisiert sind.

Wenn die Schätzung für die Interferenz perfekt wäre, dann würden die resultierenden Vektoren

$$\tilde{y}^{(1)}[i] = \left( \tilde{y}^{(1)}[0][i],...,\tilde{y}^{(1)}[\tilde{K}-1][i] \right)$$

und

$$\tilde{y}^{(2)}[i] = \left( \tilde{y}^{(2)}[0][i],...,\tilde{y}^{(2)}[\tilde{K}-1][i] \right)$$

keine Interferenz haben. In diesem Fall und bei perfekter Synchronisation bzw. Symbolzeitwiedergewinnung, d. h. $\tau_1 = \tau_2 = 0$, ist die gesamte empfangene Energie $E_s[j]$ des informationstragenden Teils des j-ten Paars von Abtastwerten $\tilde{y}^{(1)}[j][i]$, $\tilde{y}^{(2)}[j][i]$ folgendermaßen definiert:

$$E_s[j] = \sigma_x^2 \cdot \left( |a^{(1)}[j]|^2 + |a^{(2)}[j]|^2 \right) \cdot T_s \tag{14}$$

Dabei ist $\sigma_x^2$ die Varianz der QPSK-Konstellation in dem Sender.

Wenn jedoch die variierende Zuverlässigkeit der Ausgangssignale des Decodierers berücksichtigt wird, existiert immer noch eine Restinterferenz in den Vektoren $\tilde{y}^{(1)}$ und $\tilde{y}^{(2)}$. Wie es in Ralf R. Müller und Johannes B. Huber "Iterated Soft-Decision Interference Cancellation for CDMA", Broadband Wireless Communications, Pupolin Luise, S. 110-115, Springer-Verlag, 1998, beschrieben ist, kann die Varianz

$$\left(\sigma_{int}^{(1)}[j][i]\right)^2$$

der Restinterferenz in einem Abtastwert $\tilde{y}^{(1)}[j][i]$ von $\tilde{y}^{(1)}[i]$ folgendermaßen berechnet werden:

$$\left(\sigma_{int}^{(1)}[j][i]\right)^2 \approx |a^{(2)}[j]|^2 \cdot \sum_{l=-L}^{L} |h^{(2\to1)}[-l]|^2 \cdot \left(\sigma_x^2 - |\hat{x}^{(2)}[j+l][i]|^2\right) \qquad (15)$$

Hier ist 2L + 1 die approximierte Länge des Filters $H^{(2\to1)}(z)$. Es sei darauf hingewiesen, daß der Empfänger

$$\left(\sigma_{int}^{(1)}[j][i]\right)^2$$

schätzen kann, wenn $a^{(2)}[j]$ und $h^{(2\to1)}(1)$ durch die jeweiligen Schätzwerte $\hat{a}^{(2)}[j]$ und $\hat{h}^{(2\to1)}[l]$ ersetzt sind.

Im nachfolgenden wird detaillierter auf den Demapper 541a oder 541b von Fig. 6 eingegangen. Die Gesamtleistung der mittelwertfreien Verzerrung $d^{(1)}[j][i]$, die in einem Abtastwert $\tilde{y}^{(1)}[j][i]$ liegt, ist die Summe der Restinterferenzleistung

$$\left(\sigma_{int}^{(1)}[j][i]\right)^2$$

und der Rauschleistung $\sigma_\eta^2$. Die komplexe Zufallsvariable $d^{(1)}[j][i]=d_I^{(1)}[j][i]+jd_Q^{(1)}[j][i]$ ist nicht zirkulär. In diesem Zusammenhang wird auf Bernard Picinbono, "On circularity", IEEE Transactions on Signal Processing, Bd. 42, S.3473-3482, 1994 verwiesen. Dieselbe hat tatsächlich eine nicht-Gauß'sche Verteilung. Aus Einfachheitsgründen wird jedoch $d^{(1)}[j][i]$ als eine zweidimensionale reelle Gauß'sche Zufallsvariable $d^{(1)}[j][i] \hat{=} [d_I^{(1)}[j][i] d_Q^{(1)}[j][i]]^T$ in dem Empfänger modelliert, und zwar mit derselben Leistung wie $d^{(1)}[j][i]$. Der optimale Demapper mit Seiteninformationen basiert auf dieser Annahme. Das Zeichen $\bullet^T$ bezeichnet den Transpositionsoperator. Die Wahrscheinlichkeitsdichtefunktion (pdf)

$$f_{d^{(1)}[j][i]}\left(d^{(1)}[j][i]\right)$$

lautet somit folgendermaßen:

$$f_{d^{(1)}[j][i]}\left(d^{(1)}[j][i]\right) = \frac{1}{2\pi\sqrt{\left(\sigma_{d^{(1)},I}[j][i]\right)^2 \left(\sigma_{d^{(1)},Q}[j][i]\right)^2 - \left(\sigma_{d^{(1)},IQ}[j][i]\right)^4}} \cdot$$

$$\cdot \exp\left(-\frac{d^{(1)}[j][i]^T \begin{bmatrix} \left(\sigma_{d^{(1)},Q}[j][i]\right)^2 & -\left(\sigma_{d^{(1)},IQ}[j][i]\right)^2 \\ -\left(\sigma_{d^{(1)},IQ}[j][i]\right)^2 & \left(\sigma_{d^{(1)},I}[j][i]\right)^2 \end{bmatrix} \cdot d^{(1)}[j][i]}{2\left(\left(\sigma_{d^{(1)},I}[j][i]\right)^2 \left(\sigma_{d^{(1)},Q}[j][i]\right)^2 - \left(\sigma_{d^{(1)},IQ}[j][i]\right)^4\right)}\right) \qquad (16)$$

Die Varianzen

$$\left(\sigma_{d^{(1)},I}[j][i]\right)^2$$

und

$$\left(\sigma_{d^{(1)},Q}[j][i]\right)^2$$

der zwei Komponenten $d^{(1)}_I[j][i]$ und $d^{(1)}_Q[j][i]$ und die Covarianz

$$\left(\sigma_{d^{(1)},IQ}[j][i]\right)^2$$

zwischen diesen kann folgendermaßen berechnet werden:

$$\left(\sigma_{d^{(1)},I}[j][i]\right)^2 = \sum_{l=-L}^{L}\left[\left(\Re\left(a^{(2)}[j]\cdot h^{(2\to1)}[-l]\right)\right)^2\cdot\left(\sigma_x^2/2-\left(\Re\left(\hat{x}^{(2)}[j+1][i]\right)\right)^2\right)+\right.$$
$$\left.+\left(\Im\left(a^{(2)}[j]\cdot h^{(2\to1)}[-l]\right)\right)^2\cdot\left(\sigma_x^2/2-\left(\Im\left(\hat{x}^{(2)}[j+1][i]\right)\right)^2\right)\right]+\sigma_n^2/2 \qquad (17)$$

$$\left(\sigma_{d^{(1)},Q}[j][i]\right)^2 = \sum_{l=-L}^{L}\left[\left(\Re\left(a^{(2)}[j]\cdot h^{(2\to1)}[-l]\right)\right)^2\cdot\left(\sigma_x^2/2-\left(\Im\left(\hat{x}^{(2)}[j+1][i]\right)\right)^2\right)+\right.$$
$$\left.+\left(\Im\left(a^{(2)}[j]\cdot h^{(2\to1)}[-l]\right)\right)^2\cdot\left(\sigma_x^2/2-\left(\Re\left(\hat{x}^{(2)}[j+1][i]\right)\right)^2\right)\right]+\sigma_n^2/2 \qquad (18)$$

$$\left(\sigma_{d^{(1)},IQ}[j][i]\right)^2 = \sum_{l=-L}^{L}\Re\left(a^{(2)}[j]\cdot h^{(2\to1)}[-l]\right)\cdot\Im\left(a^{(2)}[j]\cdot h^{(2\to1)}[-l]\right)\cdot$$
$$\cdot\left(\left(\Im\left(\hat{x}^{(2)}[j+1][i]\right)\right)^2-\left(\Re\left(\hat{x}^{(2)}[j+1][i]\right)\right)^2\right) \qquad (19)$$

hier stellen $\Re(\bullet)$ und $\Im J(\bullet)$ den Real- und den Imaginärteil der entsprechenden komplexen Variable dar.

Aus Einfachheitsgründen der Notation sei angenommen, daß das Mapping im Sender von einem Paar ($\tilde{c}^{(1)}$ [2j+1], $\tilde{c}^{(1)}[2j]$) von aufeinanderfolgenden Bits in dem Codewort $\tilde{c}^{(1)}$ in ein komplexwertiges QPSK-Symbol durch X($\tilde{c}^{(1)}$ [2j+1],$\tilde{c}^{(1)}[2j]$) dargestellt ist. Aus der obigen Wahrscheinlichkeitsdichtefunktion PDF der Verzerrung $d^{(1)}[j][i]$ in einem Abtastwert $\tilde{y}^{(1)}[j][i]$ und unter Verwendung der zusätzlichen Seiteninformationen, die durch die Pre-Demapping-Wahrscheinlichkeiten $p^{\tilde{c}^{(1)},predem}[i]$ gegeben sind, wird folgende Größe definiert, die der verbundenen pdf des Sendens des QPSK-Signalpunkts, der dem Codebit-Paar ($\tilde{c}^{(1)}[2j+1]$, $\tilde{c}^{(1)}[2j]$) entspricht, und des Empfangens des Abtastwerts $\tilde{y}^{(1)}[j][i]$ entspricht:

$$\Lambda^{(1)}\left(\tilde{c}^{(1)}[2j+1],\tilde{c}^{(1)}[2j]\right)[j][i] \overset{\Delta}{=} \mathrm{pdf}\left(\tilde{y}^{(1)}[j][i],\tilde{c}^{(1)}[2j+1],\tilde{c}^{(1)}[2j]\,|\,p_{\tilde{c}^{(1)},predem}[i]\right) \qquad (20)$$

$$= f_{\hat{d}^{(1)}[j][i]}\begin{pmatrix} \Re\left(\widetilde{y}^{(1)}[j][i] - \hat{a}^{(1)}[j] \cdot X\left(\widetilde{c}^{(1)}[2j+1], \widetilde{c}^{(1)}[2j]\right)\right) \\ \Im\left(\widetilde{y}^{(1)}[j][i] - \hat{a}^{(1)}[j] \cdot X\left(\widetilde{c}^{(1)}[2j+1], \widetilde{c}^{(1)}[2j]\right)\right) \end{pmatrix} \cdot$$

$$\cdot \left( \left(1 - \widetilde{c}^{(1)}[2j+1]\right) \cdot \left(1 - p_{\widetilde{c}^{(1)}, predem}[2j+1][i]\right) + \widetilde{c}^{(1)}[2j+1] \cdot p_{\widetilde{c}^{(1)}, predem}[2j+1][i] \right) \cdot$$

$$\cdot \left( \left(1 - \widetilde{c}^{(1)}[2j]\right) \cdot \left(1 - p_{\widetilde{c}^{(1)}, predem}[2j][i]\right) + \widetilde{c}^{(1)}[2j] \cdot p_{\widetilde{c}^{(1)}, predem}[2j][i] \right) \qquad (21)$$

Nun kann die Post-Demapping-Wahrscheinlichkeit, die durch den optimalen Demapper für einen perfekt synchronisierten Empfänger (d. h. $\tau_1 = 0$) berechnet wird, folgendermaßen angegeben werden:

$$\Pr\left(\widetilde{c}^{(1)}[2j] = 1 \mid \widetilde{y}^{(1)}[i], p_{\widetilde{c}^{(1)}, predem}[i]\right) = \qquad (22)$$

$$= \frac{\Lambda^{(1)}(0,1)[j][i] + \Lambda^{(1)}(1,1)[j][i]}{\Lambda^{(1)}(0,0)[j][i] + \Lambda^{(1)}(0,1)[j][i] + \Lambda^{(1)}(1,0)[j][i] + \Lambda^{(1)}(1,1)[j][i]} \qquad (23)$$

Auf ähnliche Art und Weise berechnet der Demapper für Codebits mit ungeradzahligen Indizes die Post-Demapping-Wahrscheinlichkeit folgendermaßen:

$$\Pr\left(\widetilde{c}^{(1)}[2j+1] = 1 \mid \widetilde{y}^{(1)}[i], p_{\widetilde{c}^{(1)}, predem}[i]\right) = \qquad (24)$$

$$= \frac{\Lambda^{(1)}(1,0)[j][i] + \Lambda^{(1)}(1,1)[j][i]}{\Lambda^{(1)}(0,0)[j][i] + \Lambda^{(1)}(0,1)[j][i] + \Lambda^{(1)}(1,0)[j][i] + \Lambda^{(1)}(1,1)[j][i]} \qquad (25)$$

Wie es bei einem iterativen Empfänger üblich ist, wird es bevorzugt, daß die Wahrscheinlichkeiten, die zwischen den teilnehmenden Empfängerkomponenten ausgetauscht werden, extrinsische Wahrscheinlichkeiten sind. Dementsprechend berechnet der Demapper die folgenden extrinsischen Wahrscheinlichkeiten und leitet sie an den Decoder weiter:

$$p_{\widetilde{c}^{(1)}, extrdem}[k][i] = \frac{\dfrac{\Pr\left(\widetilde{c}^{(1)}[k] = 1 \mid \widetilde{y}^{(1)}[i], p_{\widetilde{c}^{(1)}, predem}[i]\right)}{p_{\widetilde{c}^{(1)}, predem}[k][i]}}{\dfrac{1 - \Pr\left(\widetilde{c}^{(1)}[k] = 1 \mid \widetilde{y}^{(1)}[i], p_{\widetilde{c}^{(1)}, predem}[i]\right)}{1 - p_{\widetilde{c}^{(1)}, predem}[k][i]} + \dfrac{\Pr\left(\widetilde{c}^{(1)}[k] = 1 \mid \widetilde{y}^{(1)}[i], p_{\widetilde{c}^{(1)}, predem}[i]\right)}{p_{\widetilde{c}^{(1)}, predem}[k][i]}}$$

$$(26)$$

Wie es bereits erwähnt worden ist, wird ein Gray-Mapping in den Mappern 22a, 22b von Fig. 2 verwendet. Dies bedeutet, daß ein Codebit eines Paars $(\widetilde{c}^{(1)}_{2j}, \widetilde{c}^{(1)}_{2j})$ die I-Komponente des QPSK-Symbols $x^{(1)}[j]$ bestimmt, und daß das andere Codebit die Q-Komponente bestimmt. Der Grund dafür ist, daß das Gray-Mapping einer Art und Weise des Codierens entspricht, die in der Codiertheorie als systematische Codierung bezeichnet wird, da die Codebits unmittelbar in dem QPSK-Symbol identifiziert werden können. Aus der Codiertheorie ist ferner bekannt, daß das Ausgangssignal eines Decodierers vom BCJR-Typ, der einem systematischen Codierer zugeordnet ist, im Mittel eine verbesserte Zuverlässigkeit im Vergleich zum Eingang in den Decodierer hat, unabhängig von dem Signal/Rausch-Verhältnis (SNR). Daher ist die systematische Codierung besonders für niedrige Signal/Rausch-Verhältnisse vorteilhaft und wird daher für alle iterativen Schemen bevorzugt, die bei niedrigen Signal/Rausch-Verhältnissen arbeiten.

Obwohl es auf den ersten Blick nicht nachvollziehbar erscheinen mag, eine Iteration zwischen einem Decodierer und einem QPSK-Demapper im Falle eines Gray-Mappings durchzuführen, ist es im vorliegenden Fall doch vorteilhaft. Die Interferenz-Reduktion führt im allgemeinen zu einer nichtzirkulären Verzerrung $d^{(1)}[j][i]$ in den Abtastwerten $\tilde{y}^{(1)}[j][i]$, d. h. es stellt sich heraus, daß in den Gleichungen 17 bis 19 $\sigma_{d(1),IQ}[j|i]\neq 0$ gilt. Daher sind die I- und die Q-Komponente von $\tilde{y}^{(1)}[j][i]$ statistisch abhängig. Selbst wenn ein Gray-Mapping verwendet wird und die Information in der I- bzw. der Q-Komponente von $\tilde{y}^{(1)}[j][i]$ genau einem Codebit des Paars $(\tilde{c}^{(1)}[2j+1],\tilde{c}^{(1)}[2j])$ entspricht, beeinflußt die Pre-Demapping-Wahrscheinlichkeit dieses einen Bits tatsächlich die Post-Demapping-Wahrscheinlichkeit für das andere Bit aufgrund dieser statistischen Abhängigkeit.

Als Beispiel wird der Fall betrachtet, wo das folgende Gray-Mapping verwendet wird:

$$X(0,0)= -1- j, \; X(0,1) =1 - j, X(1,0)= -1 + j \; und \; X(1,1) =1 + j$$

Das Bit $\tilde{c}^{(1)}[2j+1]$ wird auf die Q-Komponente abgebildet. Ferner wird folgendes angenommen: $\sigma_{d(1),1}[j][i] = \sigma_{d(1),Q}[j][i]=0{,}5$ und $a^{(1)}[j]=1$.

Fig. 7 zeigt eine Berechnung für $\sigma_{d(1),IQ}[j][i]=0$, d. h. die Verzerrung $d^{(1)}[j][i]$ ist zirkulär. Für diese Art von Verzerrung ist zu sehen, daß $p'_{\tilde{c}^{(1)},extrdem}[2j+1][i]$ nur von der Q-Komponente von $\tilde{y}^{(1)}[j][i]$ abhängt. Diese Größe ist unabhängig von der Pre-Demapping-Wahrscheinlichkeit $p_{\tilde{c}^{(1)},predem}[2j][i]$ des Codebits in der I-Komponente.

Wenn folgendes beispielhafte Szenario betrachtet wird $\sigma_{d(1),IQ}[j][i]=0{,}49$ und $p_{\tilde{c}^{(1)},predem}[2j+1][i]=p_{\tilde{c}^{(1)},predem}[2][i]=1/2$, dann ist aus der Wahrscheinlichkeitsdichtefunktion

$$\mathrm{pdf}\left(\tilde{y}^{(1)}[j][i] \mid p_{\tilde{c}^{(1)},predem}[i]\right)$$

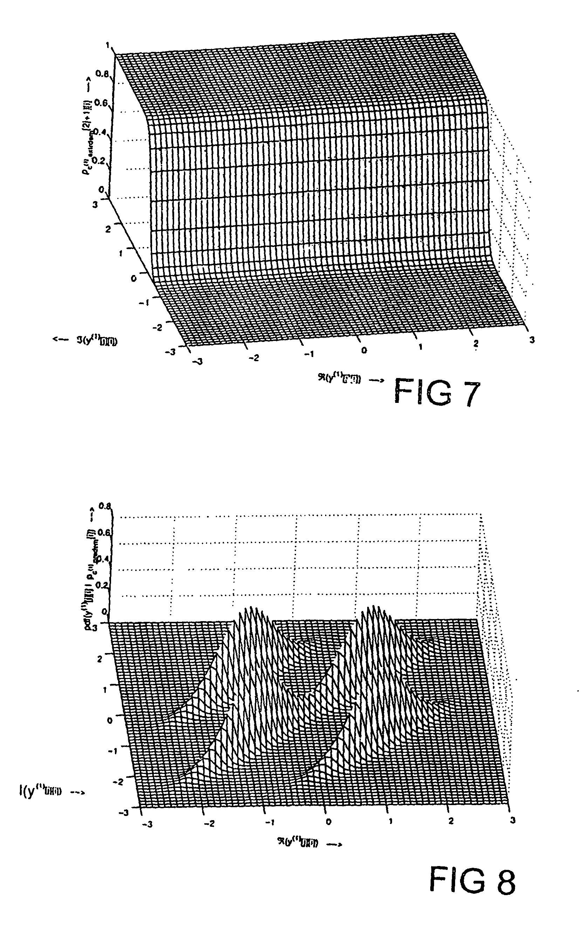

des empfangenen Abtastwerts, die in Fig. 8 dargestellt ist, zu sehen, daß die Verzerrung stark nicht-zirkulär ist.

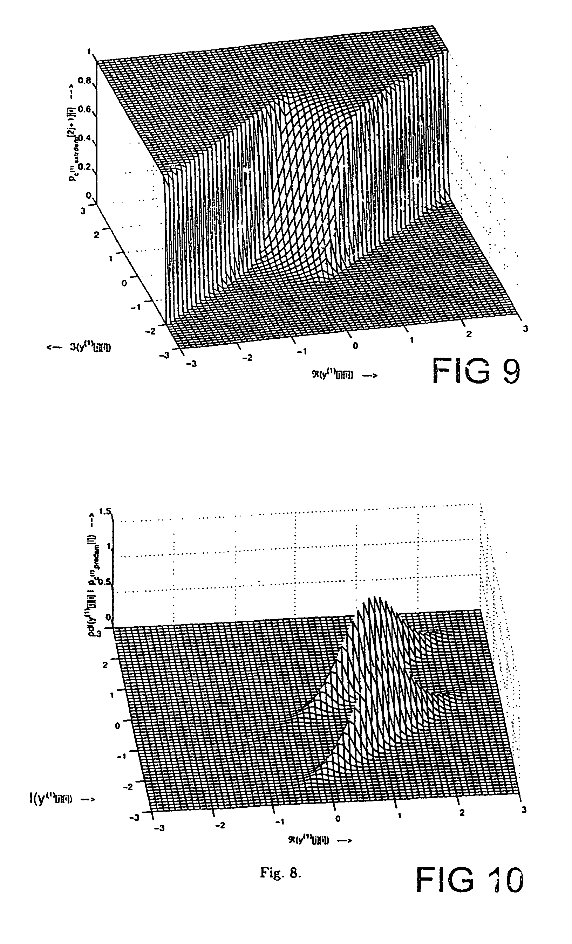

Nun hat die extrinsische Wahrscheinlichkeit $p'_{\tilde{c}^{(1)},extrdem}[2j+1][i]$ die in Fig. 9 gezeigte Funktion, und es ist zu sehen, daß die extrinsische Wahrscheinlichkeit für das Codebit in der Q-Komponente von der Q- und darüber hinaus auch von der I-Komponente von $\tilde{y}^{(1)}[j][i]$ abhängt.

Darüber hinaus hängt dieselbe von der Pre-Demapping-Wahrscheinlichkeit $p_{\tilde{c}^{(1)},predem}[2j][i]$ des Codebits in der I-Komponente ab. Um dies darzustellen, werden folgende Annahmen für die Pre-Demapping-Wahrscheinlichkeit für die I-Komponente getroffen: $p'_{\tilde{c}^{(1)},predem}[2j][i]=0{,}99$ und $p_{\tilde{c}^{(1)},predem}[2j+1][i]=1/2$. Fig. 10 zeigt die Wahrscheinlichkeitsdichtefunktion

$$\mathrm{pdf}\left(\tilde{y}^{(1)}[j][i] \mid p_{\bar{\tilde{c}}^{(1)},predem}[i]\right),$$

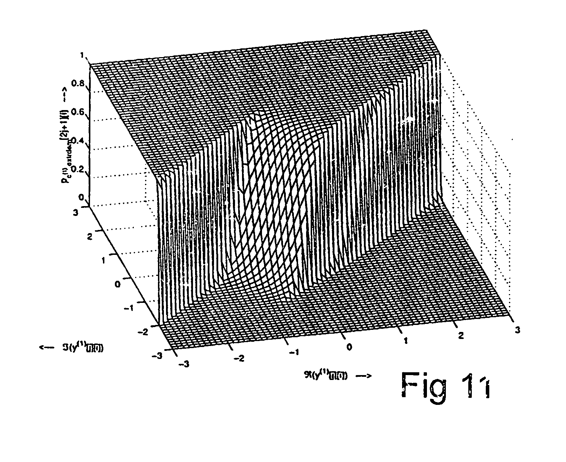

während Fig. 11 $p_{\tilde{c}^{(1)},extrdem}[2j+1][i]$ zeigt. Die Funktion der extrinsischen Wahrscheinlichkeit der Q-Komponente wurde vollständig asymmetrisch und ist unterschiedlich von der in Fig. 7 gezeigten, und zwar aufgrund der unterschiedlichen Pre-Demapping-Wahrscheinlichkeiten für die I-Komponente.

Das Demapping für den zweiten Satelliten wird prinzipiell genauso ausgeführt wie das Demapping für den ersten Satelliten. Die Vektoren $p_{\tilde{c}^{(1)},extrdem}[i]$ und $p'_{\tilde{c}^{(1)},extrdem}[i]$ der extrinsischen Wahrscheinlichkeiten, die durch den Soft-Demapper berechnet werden, werden dann, wie es in Fig. 6 zu sehen ist, durch die entsprechenden Interleaver de-interleaved, wobei die De-Interleaver invers zu den entsprechenden Interleavern im Sender sind.

Das Vorsehen zumindest eines Interleavers in einem Sendezweig und vorzugsweise von einem eigenen Interleaver für jeden Sendezweig hat drei wesentliche Vorteile, weshalb Interleaver für ein Ausführungsbeispiel der vorliegenden Erfindung bevorzugt werden:

1. Der Kanal für das Übertragungssystem ist ein Kanal mit Schwund. Daher müssen starke Schwunderscheinungen, die auch als Deep-Fades bekannt sind, angegangen werden, indem die betroffenen Symbole auf unterschiedliche Stellen in dem Codewort gebracht werden.

2. Der Demapper und der Decoder tauschen iterativ extrinsische Wahrscheinlichkeiten aus. Wahrscheinlichkeiten, die in den entsprechenden Ausgangsvektoren eines Elements benachbart sind, sind statistisch abhängig. Andererseits wird dagegen angenommen, daß benachbarte Wahrscheinlichkeiten an dem Eingang eines Elements statistisch unabhängig sind. Für jedes iterative System wird ein optimales Verhalten erreicht, wenn diese Annahme der statistischen Unabhängigkeit der Eingangssymbole erfüllt ist. Daher wird es bevorzugt, einen Interleaver einzusetzen, um benachbarte Elemente im Ausgangsvektor eines Elements auf unterschiedliche Plätze bzw. Elemente an dem Eingang des anderen Elements zu verteilen. Diese Vorgehensweise wird üblicherweise auch als "Dekorrelation der extrinsischen Wahrscheinlichkeiten" bezeichnet.

3. Aufgrund der Interferenzreduktion im vorliegenden erfindungsgemäßen Empfängerkonzept ist die Verzerrung in $\tilde{y}^{(1)}[i]$ und $\tilde{y}^{(1)}[i]$ tatsächlich farbig. Wenn beispielsweise ein Fehler in der Interferenzreduktion gemacht wird und die Verzerrung sehr groß ist, dann wird nicht nur ein QPSK-Symbol, sondern werden mehrere aufeinanderfolgenden QPSK-Symbole ernsthaft gestört. Wie bei einem Fading-Kanal müssen auch diese Fehler-Bursts verteilt werden, indem sie auf unterschiedliche Plätze in dem Codewort verteilt werden. Als Interleaver werden ferner s-Random-Interleaver bevorzugt, wie es bereits ausgeführt worden ist. Aufgrund ihrer Ausbreitungs- (Spreading-) Begrenzung stellen sie sicher, daß benachbarte Elemente an ihrem Eingang tatsächlich zu entfernten Ausgangselementen gebracht werden, so daß Deep-Fades und Fehler-Bursts zerstört werden. Andererseits hat sich herausgestellt, daß ein zufallsartiger, d. h. nicht regelmäßiger, Interleaver in iterativen Systemen ein besseres Verhalten zeigt als eine regelmäßige Struktur.

Die de-interleavten Vektoren $p^{\tilde{z}^{(1)},predec}[i]$ und $p^{\tilde{z}^{(1)},predec}[i]$ der Pre-Decodier-Wahrscheinlichkeiten für die Unter-Codewörter $\mathbf{c}^{(1)}$ und $\mathbf{c}^{(2)}$ werden schließlich seriell/parallel-gewandelt und dienen als Eingang in den SISO-Decoder. Basierend auf diesen Pre-Decodier-Wahrscheinlichkeiten $\mathbf{p}_{c,predec}[i]$ können die neuen Post-Decodier-Wahrscheinlichkeiten $\mathbf{p}_{c,postdec}[i]$ und die extrinsischen Wahrscheinlichkeiten $\mathbf{p}_{c,extrdec}[i]$ berechnet werden.

Nun ist eine Iteration i des Empfängers fertig. Da $\mathbf{p}_{c,postdec}[i]$ und $\mathbf{p}_{c,extrdec}[i]$ im allgemeinen eine bessere Zuverlässigkeit im Vergleich zu $\mathbf{p}_{c,postdec}[i - 1]$ und $\mathbf{p}_{c,extrdec}[i - 1]$ liefern, können diese Vektoren für eine weitere Iteration i + 1 verwendet werden, um die Interferenzreduktion weiter zu verbessern. Wenn das iterative System korrekt konvergiert, dann werden die Vektoren $\tilde{y}^{(1)}[i]$ und $\tilde{y}^{(1)}[i]$ nach mehreren Iterationen interferenzfrei sein. Dann gibt der Decodierer die Post-Decodier-Wahrscheinlichkeiten $\mathbf{p}_{c,postdec}[i]$ für die Informationsbits u zu einem Schwellwertentscheider 555 von Fig. 6, der einen Vektor $\hat{\mathbf{u}}$ von geschätzten Informationsbits zu der Informations-Senke 62 liefert.

Da im ersten Durchgang, also vor der ersten Iteration kein Ausgangssignal des Decodierers existiert, wird es bevorzugt, als Ausgangswert für diese Iteration mittlere Wahrscheinlichkeiten $\mathbf{p}_{c,postaec}[0] = \mathbf{p}_{c,extrdec}[0] = [1/2\ 1/2\ ...\ 1/2]$ für diese Iteration zu nehmen. Diese Wahrscheinlichkeiten sagen, daß jedes Codebit $c_k$ eine "0" mit derselben Wahrscheinlichkeit 1/2 wie eine "1" sein kann. Dementsprechend beträgt die geschätzte Interferenz $y_{int}^{(1)}[I] = y_{int}^{(2)}[I]=0$. Damit wird in der ersten Iteration keine Interferenz-Reduktion erreicht. Genauso arbeiten die erfindungsgemäßen Soft-Demapper 541a, 541b wie übliche QPSK-Demapper, indem $\mathbf{p}_{c,extrdec}[0] = [1/2\ 1/2\ ...\ 1/2]$ gesetzt wird. Übliche QPSK-Demapper arbeiten ohne Seiteninformationen, die durch die Pre-Demapping-Wahrscheinlichkeiten gegeben sind. Daher entspricht die erste Iteration des betrachteten Empfängers der eines einfachen Empfängers ohne Interferenzaufhebung und mit einem üblichen QPSK-Demapper.

Als Dimensionierungsbeispiel kann ein Informationswort mit einer Länge von 494 Informationseinheiten verwendet werden. Bei einem Codegedächtnis nu = 6 und einer Coderate $R_c$ von 1/4 ergibt sich eine Codewortlänge von N = 1000 und eine Länge $\tilde{\kappa}$ = 500 der Vektoren von QPSK-Symbolen. Eine Untergruppe von Code-Einheiten hat also 1000 Codeeinheiten. Daher beträgt die Gesamtrate des Systems R = 494 : 500 = 0,99. Beide verwendeten Interleaver der Länge N/2 = 1000 können als unterschiedliche s-Random-Interleaver mit einem Spreizwert s = 17 ausgebildet werden. Das Übertragungsfilter G(f) des Systems kann als Quadratwurzel-Raised-Cosinus-Filter mit einem Roll-Off-Faktor $\alpha$ = 0,2 ausgebildet sein.

Für die Simulation bzw. Schätzung der Übertragungskanäle werden die Kanäle als Rice-Fading simuliert, d. h. sie besitzen eine LOS-Komponente (LOS = Line Of Sight) und ferner eine Rayleigh-Fading-Komponente mit entsprechender Varianz. Zur Simulation kann die normierte maximale Doppler-Frequenz dieser Prozesse zu 0,01 angenommen werden. Für die zwei statistisch unabhängigen Rice-Fading-Prozesse können entsprechende Rice-Faktoren angegeben werden.

Simulationen haben ergeben, daß bereits nach wenigen (meist bereits nach fünf) Iterationsschritten keine bedeutsame Verbesserung mehr festgestellt werden kann. Eine Konvergenz kann somit nach höchstens fünf Iterationsschritten erreicht werden.

Es sei darauf hingewiesen, daß für die Synchronisierung des Abtasters 40 verschiedene bekannte Konzepte eingesetzt werden können, wie z. B. Trainingssequenzen, die von den beiden unterschiedlichen Sendern abgesendet werden und aus denen ein Abtaster sich auf den entsprechenden Sender synchronisieren kann. Um während dieses Synchronisations-Vorlaufs Interferenzen zu unterdrücken, könnte beispielsweise in einem vorbestimmten Zeitfenster, das dem Empfänger bekannt ist, immer nur ein Sender senden, derart, daß eine optimale Synchronisation mit geringer Interferenz erreicht wird. Zur Berechnung der Interferenzsignale, bei der ja Kanalparameter eingesetzt werden, um die Gewichtung in den Multiplizierern 581a und 581b zu bewerkstelligen, können übliche Kanalschätzverfahren herangezogen werden, welche ebenfalls mit Trainingssequenzen arbeiten. Alternativ existieren auch Blindschätzverfahren, die eine Kanalschätzung ohne vorbekannte Trainingssequenzen erreichen können.

Dasselbe gilt auch für die Übertragungsfilter 582a, 582b von Fig. 6, die eine nicht-ideale Synchronisation des Abtasters modellieren. Als erste Näherung können die Übertragungsfunktionen dieser Filter auf "1" gesetzt werden, wenn eine ideale Synchronisation angenommen wird. Je nach Anwendungsfall kann diese Übertragungsfunktion auch empirisch geschätzt werden.

**Patentansprüche**

1. Empfangsvorrichtung zum Empfangen eines überlagerten Empfangssignals, das einer Überlagerung eines von einem ersten Sender (16a) und einem von dem ersten Sender (16a) entfernt angeordneten zweiten Sender (16b) übertragenen ersten bzw. zweiten Sendesignals entspricht, wobei das erste und das weite Sendesignal in demselben Frequenzband liegen, wobei das erste Sendesignal unter Verwendung einer ersten Sende-Untergruppe von Codeeinheiten (14a) erzeugt ist, wobei das zweite Sendesignal unter Verwendung einer zweiten Sende-Untergruppe von Codeeinheiten (14b) wobei die Empfangsvorrichtung folgende Merkmale aufweist: erzeugt ist, wobei die erste Sende-Untergruppe von Codeeinheiten und die zweite Sende-Untergruppe von Codeeinheiten zusammen eine Mehrzahl von Codeeinheiten darstellen, die durch eine Redundanz-hinzufügende Codierung aus einem Informationswort mit einer Mehrzahl von Informationseinheiten erzeugt worden sind,

   eine Einrichtung (40) zum Abtasten des überlagerten Empfangssignals synchron (41a) zu dem ersten Sender, um ein erstes Empfangssignal zu erhalten, das dem übertragenen ersten Sendesignal zugeordnet ist, und zum Abtasten des überlagerten Empfangssignals synchron (41b) zu dem zweiten Sender, um ein zweites Empfangssignal zu erhalten, das dem übertragenen zweiten Sendesignal zugeordnet ist;

   eine Decodiereinrichtung (54) zum Decodieren des ersten und des zweiten Empfangssignals (55c, 55d), um eine erste Empfangs-Untergruppe (56a) von Codeeinheiten, die der ersten Sende-Untergruppe von Codeeinheiten zugeordnet ist, zu erhalten, und zum Decodieren des ersten und des zweiten Empfangssignals (55e, 55f), um eine zweite Empfangs-Untergruppe (56b) von Codeeinheiten zu erhalten, die der zweiten Sende-Untergruppe von Codeeinheiten zugeordnet ist;

   eine Berechnungseinrichtung (58) zum Berechnen eines ersten Interferenzsignals unter Verwendung der zweiten Empfangs-Untergruppe von Codeeinheiten und eines zweiten Interferenz-Signals unter Verwendung der ersten Empfangs-Untergruppe von Codeeinheiten;

   eine Interferenz-Reduktionseinrichtung (60) zum Kombinieren des ersten Interferenzsignals mit dem ersten Empfangssignal und zum Kombinieren des zweiten Interferenzsignals mit dem zweiten Empfangssignal, um ein verbessertes erstes Empfangssignal und ein verbessertes zweites Empfangssignal zu erhalten; und

   eine Steuerungseinrichtung zum Steuern der Decodiereinrichtung (54), damit dieselbe das verbesserte erste Empfangssignal und das verbesserte zweite Empfangssignal decodiert und basierend auf dem verbesserten ersten Empfangssignal und dem verbesserten zweiten Empfangssignal das Informationswort mit der Mehrzahl von Informationseinheiten ausgibt.

2. Empfangsvorrichtung nach Anspruch 1,
   bei der die Steuerungseinrichtung (62) ausgebildet ist, um die Interferenzreduktionseinrichtung (60) und die Berechnungseinrichtung (58) anzusteuern, damit dieselben unter Verwendung des verbesserten ersten Empfangssignals und des verbesserten zweiten Empfangssignals mittels einer oder mehrerer Iterationsschritte ein weiter verbessertes erstes und zweites Empfangssignal berechnen, und um die Decodiereinrichtung (54) anzusteuern, um unter Verwendung des weiteren verbesserten ersten Empfangssignals und des weiteren verbesserten zweiten Empfangssignals das Informationswort mit der Mehrzahl von Informationseinheiten zu erhalten.

3. Empfangsvorrichtung nach Anspruch 1 oder 2, bei der die Decodiereinrichtung (54) folgende Merkmale aufweist:

   eine Abbildungseinrichtung (541a, 541b) zum Umsetzen des ersten Empfangssignals oder des zweiten Empfangssignals in Vor-Decodier-Wahrscheinlichkeiten für die erste Empfangs-Untergruppe von Codeeinheiten und für die zweite Empfangs-Untergruppe von Codeeinheiten;

einen Soft-In-Soft-Out-Decodierer (540) zum Berechnen einer Post-Decodier-Wahrscheinlichkeit für die erste und die zweite Empfangs-Untergruppe von Codeeinheiten; und eine Schätzeinrichtung (547a, 547b) zum Schätzen der ersten und der zweiten Empfangs-Untergruppe auf der Basis der Post-Decodier-Wahrscheinlichkeit für die erste und die zweite Empfangs-Untergruppe von Codeeinheiten.

4. Empfangsvorrichtung nach Anspruch 3, bei der der Soft-In-Soft-Out-Decodierer ein Bahl-Locke-Selinek-Raviv-Decodierer ist.

5. Empfangsvorrichtung nach Anspruch 3 oder 4,
   bei der bei der Erzeugung des ersten und des zweiten Sendesignals eine Interleaving-Funktion vorhanden ist, und
   bei der die Decodiereinrichtung (54) folgende Merkmale aufweist:

   einen De-Interleaver (542a, 542b) zum Rückgängigmachen der Interleaving-Funktion für das erste oder das zweite Sendesignal, wobei der De-Interleaver zwischen der Abbildungseinrichtung (541a, 541b) und dem Decodierer (540) geschaltet ist; und

   einen Interleaver (546a, 546b), der ausgebildet ist, um dieselbe Interleaving-Funktion durchzuführen, wobei der Interleaver zwischen dem Decoder (540) und der Schätzeinrichtung (547a, 547b) angeordnet ist.

6. Empfangsvorrichtung nach einem der Ansprüche 3 bis 5,
   bei der die Abbildungseinrichtung (541a, 541b) ausgebildet ist, um unter Verwendung von Seiteninformationen aus einem vorherigen Iterationsschritt zu arbeiten, und
   bei der die Seiteninformationen extrinsische Wahrscheinlichkeiten sind, die aus den Post-Decodier-Wahrscheinlichkeiten abgeleitet sind.

7. Empfangsvorrichtung nach Anspruch 6,
   bei der die Abtasteinrichtung (40) ausgebildet ist, um unter Verwendung einer vorbestimmten Trainingssequenz von dem ersten Sender (16a) und einer vorbestimmten Trainingssequenz von dem zweiten Sender (16b) synchronisiert zu werden.

8. Empfangsvorrichtung nach einem der Ansprüche 1 bis 7,
   bei der die Berechnungseinrichtung (58) folgende Merkmale aufweist:

   eine Einrichtung (581a) zum Gewichten der zweiten Empfangs-Untergruppe von Codeeinheiten oder eines von der zweiten Empfangs-Untergruppe von Codeeinheiten abgeleiteten Modulationssymbols mit einer Kanalcharakteristik, um eine gewichtete zweite Empfangs-Untergruppe oder ein gewichtetes Modulationssymbol zu erhalten;

   eine zweite Einrichtung (581b) zum Gewichten der ersten Empfangs-Untergruppe von Codeeinheiten oder eines von der ersten Empfangs-Untergruppe abgeleiteten Modulationssymbols mit einer Kanalcharakteristik, um eine gewichtete erste Empfangs-Untergruppe oder ein gewichtetes Modulationssymbol zu erhalten.

9. Empfangsvorrichtung nach Anspruch 3,
   bei der die Abbildungseinrichtung eine quartenary phase shift keying Demapping-Einrichtung ist, und
   bei der die Schätzeinrichtung eine minimum means squared error Schätzeinrichtung ist.

10. Verfahren zum Empfangen eines überlagerten Empfangssignals, das einer Überlagerung eines von einem ersten Sender (16a) und einem von dem ersten Sender (16a) entfernt angeordneten zweiten Sender (16b) übertragenen ersten bzw. zweiten Sendesignals entspricht, wobei das erste und das zweite Sendesignal in demselben Frequenzband liegen, wobei das erste Sendesignal unter Verwendung einer ersten Sende-Untergruppe von Codeeinheiten (14a) erzeugt ist, wobei das zweite Sendesignal unter Verwendung eine zweiten Sende-Untergruppe von Codeeinheiten (14b) erzeugt ist, wobei die erste Sende-Untergruppe von Codeeinheiten und die zweite Sende-Untergruppe von Codeeinheiten zusammen eine Mehrzahl von Codeeinheiten darstellen, die durch eine Redundanz-hinzufügende Codierung aus einem Informationswort mit einer Mehrzahl von Informationseinheiten erzeugt worden sind, mit folgenden Schritten:

Abtasten (40) des überlagerten Empfangssignals synchron (41a) zu dem ersten Sender (16a), um ein erstes Empfangssignal zu erhalten, das dem übertragenen ersten Sendesignal zugeordnet ist;

Abtasten des überlagerten Empfangssignals synchron (41b) zu dem zweiten Sender (16b), um ein zweites Empfangssignal zu erhalten, das dem übertragenen zweiten Sendesignal zugeordnet ist;

Decodieren (54) des ersten und des zweiten Empfangssignals (55c, 55d), um eine erste Empfangs-Untergruppe (56a) von Codeeinheiten, die der ersten Sende-Untergruppe von Codeeinheiten zugeordnet ist, zu erhalten;

Decodieren (54) des ersten und des zweiten Empfangssignals (55e, 55f), um eine zweite Empfangs-Untergruppe (56b) von Codeeinheiten, die der zweiten Sende-Untergruppe von Codeeinheiten zugeordnet ist, zu erhalten;

Berechnen (58) eines ersten Interferenzsignals unter Verwendung der zweiten Empfangs-Untergruppe von Codeeinheiten und eines zweiten Interferenz-Signals unter Verwendung der ersten Empfangs-Untergruppe von Codeeinheiten;

Kombinieren (60) des ersten Interferenzsignals mit dem ersten Empfangssignal und Kombinieren des zweiten Interferenzsignals mit dem zweiten Empfangssignal, um ein verbessertes erstes Empfangssignal und ein verbessertes zweites Empfangssignal zu erhalten, um eine Interferenzreduktion zu erreichen; und

Decodieren des verbesserten ersten Empfangssignals und des verbesserten zweiten Empfangssignals und Ausgeben des Informationsworts der Mehrzahl von Informationseinheiten basierend auf dem verbesserten ersten Empfangssignal und dem verbesserten zweiten Empfangssignal.

**Claims**

1. Receiving device for receiving an overlaid receiving signal corresponding to an overlaying of a first or second transmitting signal, respectively, transmitted by a first transmitter (16a) and a second transmitter (16b) arranged remote from the first transmitter (16a), wherein the first and the second transmitting signals lie in the same frequency band, wherein the first transmitting signal is generated using a first transmitting subgroup of code units (14a), wherein the second transmitting signal is generated using a second transmitting subgroup of code units (14b), wherein the first transmitting subgroup of code units and the second transmitting subgroup of code units together represent a plurality of code units which were generated by a redundancy-adding encoding from an information word with a plurality of information units, the receiving device comprising:

   means (40) for sampling the overlaid receiving signal synchronously (41a) to the first transmitter in order to obtain a first receiving signal associated with the transmitted first transmitting signal, and for sampling the overlaid receiving signal synchronously (41b) to the second transmitter in order to obtain a second receiving signal associated with the transmitted second transmitting signal;

   decoding means (54) for decoding the first and the second receiving signal (55c, 55d) in order to obtain a first receiving subgroup (56a) of code units associated with the first transmitting subgroup of code units, and to decode the first and the second receiving signal (55e, 55f) in order to obtain a second receiving subgroup (56b) of code units associated with the second transmitting subgroup of code units;

   calculating means (58) for calculating a first interference signal using the second receiving subgroup of code units and a second interference signal using the first receiving subgroup of code units;

   interference reduction means (60) for combining the first interference signal with the first receiving signal and for combining the second interference signal with the second receiving signal in order to obtain an improved first receiving signal and an improved second receiving signal; and

   control means for controlling the decoding means (54) so that the same decodes the improved first receiving signal and the improved second receiving signal and outputs the information word with the plurality of information units based on the improved first receiving signal and the improved second receiving signal.

**2.** Receiving device according to claim 1,
wherein the control means (62) is implemented in order to control the interference reduction means (60) and the calculating means (58) so that the same calculate a further improved first and second receiving signal using the improved first receiving signal and the improved second receiving signal by means of one or several iteration steps, and in order to control the decoding means (54) in order to obtain the information word with the plurality of information units using the further improved first receiving signal and the further improved second receiving signal.

**3.** Receiving device according to claim 1 or 2, wherein the decoding means (54) comprises:

mapping means (541a, 541b) for converting the first receiving signal or the second receiving signal into pre-decoding probabilities for the first receiving subgroup of code units and for the second receiving subgroup of code units;

a soft-in-soft-out decoder (540) for calculating a post-decoding probability for the first and the second receiving subgroup of code units; and

estimating means (547a, 547b) for estimating the first and the second receiving subgroup on the basis of the post-decoding probability for the first and the second receiving subgroup of code units.

**4.** Receiving device according to claim 3, wherein the soft-in-soft-out decoder is a Bahl-Cocke-Jelinek-Raviv decoder.

**5.** Receiving device according to claim 3 or 4,
wherein an interleaving function is present when generating the first and the second transmitting signal, and wherein the decoding means (54) comprises:

a de-interleaver (542a, 542b) for cancelling the interleaving function for the first or the second transmitting signal, wherein the de-interleaver is connected between the mapping means (541a, 541b) and the decoder (540); and

an interleaver (546a, 546b) which is implemented in order to perform the same interleaving function, wherein the interleaver is arranged between the decoder (540) and the estimating means (547a, 547b).

**6.** Receiving device according to one of claims 3 to 5,
wherein the mapping means (541a, 541b) is implemented in order to operate using page information from a preceding iteration step, and
wherein the page information is extrinsic probabilities derived from the post-decoding probabilities.

**7.** Receiving device according to claim 6,
wherein the sampling means (40) is implemented in order to be synchronized using a predetermined training sequence from the first transmitter (16a) and a predetermined training sequence from the second transmitter (16b).

**8.** Receiving device according to one of claims 1 to 7,
wherein the calculating means (58) comprises:

means (581a) for weighting the second receiving subgroup of code units or a modulation symbol with a channel characteristic derived from the second receiving subgroup of code units, in order to obtain a weighted second receiving subgroup or a weighted modulation symbol;

second means (581b) for weighting the first receiving subgroup of code units or a modulation symbol with a channel characteristic derived from the first receiving subgroup, in order to obtain a weighted first receiving subgroup or a weighted modulation symbol.

**9.** Receiving device according to claim 3,
wherein the mapping means is a quaternary phase shift keying demapping means, and
wherein the estimation means is a minimum mean squared error estimation means.

**10.** Method for receiving an overlaid receiving signal corresponding to an overlay of a first or second transmitting signal, respectively, transmitted by a first transmitter (16a) and by a second transmitter (16b) which is arranged remote from the first transmitter (16a), wherein the first and the second transmitting signals lie in the same frequency band, wherein the first transmitting signal is generated using a first transmitting subgroup of code units (14a), wherein the second transmitting signal is generated using a second transmitting subgroup of code units (14b), wherein the first transmitting subgroup of code units and the second transmitting subgroup of code units together represent a plurality of code units which were generated by a redundancy-adding encoding from an information word with a plurality of information units, the method comprising:

> sampling (40) the overlaid receiving signal synchronously (41a) to the first transmitter (16a) in order to obtain a first receiving signal associated with the transmitted first transmitting signal;

> sampling the overlaid receiving signal synchronously (41b) to the second transmitter (16b) in order to obtain a second receiving signal associated with the transmitted second transmitting signal;

> decoding (54) the first and the second receiving signal (55c, 55d) in order to obtain a first receiving subgroup (56a) of code units associated with the first transmitting subgroup of code units;

> decoding (54) the first and the second receiving signal (55e, 55f) in order to obtain a second receiving subgroup (56b) of code units associated with the second transmitting subgroup of code units;

> calculating (58) a first interference signal using the second receiving subgroup of code units and a second interference signal using the first receiving subgroup of code units;

> combining (60) the first interference signal with the first receiving signal and combining the second interference signal with the second receiving signal in order to obtain an improved first receiving signal and an improved second receiving signal in order to obtain an interference reduction; and

> decoding the improved first receiving signal and the improved second receiving signal and outputting the information word of the plurality of information units based on the improved first receiving signal and the improved second receiving signal.

## Revendications

1. Dispositif de réception pour recevoir un signal de réception superposé correspondant à une superposition d'un premier ou deuxième signal d'émission transmis par un premier émetteur (16a) et par un deuxième émetteur (16b) disposé éloigné du premier émetteur (16a), le premier et le deuxième signal d'émission se situant dans la même bande de fréquences, le premier signal d'émission étant généré à l'aide d'un premier sous-groupe d'émission d'unités de code (14a), le deuxième signal d'émission étant généré à l'aide d'un deuxième sous-groupe d'émission d'unités de code (14b), le premier sous-groupe d'émission d'unités de code et le deuxième sous-groupe d'émission d'unités de code représentant ensemble une pluralité d'unités de code générées par un codage à addition de redondance à partir d'un mot d'information avec une pluralité d'unités d'informations, le dispositif de réception présentant les caractéristiques suivantes :

> un dispositif (40) destiné à balayer le signal de réception superposé de manière synchrone (41a) avec le premier émetteur, pour obtenir un premier signal de réception associé au premier signal d'émission transmis, et à balayer le signal de réception superposé de manière synchrone (41b) avec le deuxième émetteur, pour obtenir un deuxième signal de réception associé au deuxième signal d'émission transmis ;
> un dispositif de décodage (54) destiné à décoder le premier et le deuxième signal de réception (55c, 55d), pour obtenir un premier sous-groupe de réception (56a) d'unités de code associé au premier sous-groupe d'émission d'unités de code, et à décoder le premier et le deuxième signal de réception (55e, 55f), pour obtenir un deuxième sous-groupe de réception (56b) d'unités de code associé au deuxième sous-groupe d'émission d'unités de code ;
> un dispositif de calcul (56) destiné à calculer un premier signal d'interférence à l'aide du deuxième sous-groupe de réception d'unités de code et un deuxième signal d'interférence à l'aide du premier sous-groupe de réception d'unités de code ;
> un dispositif de réduction d'interférence (60) destiné à combiner le premier signal d'interférence avec le premier signal de réception et à combiner le deuxième signal d'interférence avec le deuxième signal de réception, pour obtenir un premier signal de réception amélioré et un deuxième signal de réception amélioré ; et

un dispositif de commande destiné à commander le dispositif de décodage (54), pour que celui-ci décode le premier signal de réception amélioré et le deuxième signal de réception amélioré et sorte, sur base du premier signal de réception amélioré et du deuxième signal de réception amélioré, le mot d'information avec la pluralité d'unités d'informations.

2. Dispositif de réception selon la revendication 1,
dans lequel le dispositif de commande (62) est réalisé de manière à activer le dispositif de réduction d'interférence (60) et le dispositif de calcul (58), pour que ceux-ci calculent, à l'aide du premier signal de réception amélioré et du deuxième signal de réception amélioré, au moyen d'une ou de plusieurs étapes d'itération, un premier et un deuxième signal de réception davantage améliorés, et à activer le dispositif de décodage (54), pour obtenir, à l'aide du premier signal de réception davantage amélioré et du deuxième signal de réception davantage amélioré, le mot d'information avec la pluralité d'unités d'informations.

3. Dispositif de réception selon la revendication 1 ou 2, dans lequel le dispositif de décodage (54) présente les caractéristiques suivantes :

un dispositif de reproduction (541a, 541b) destiné à convertir le premier signal de réception ou le deuxième signal de réception en probabilités de prédécodage pour le premier sous-groupe de réception d'unités de code et pour le deuxième sous-groupe de réception d'unités de code ;
un décodeur Soft In Soft Out (540) destiné à calculer une probabilité de post-décodage pour le premier et le deuxième sous-groupe de réception d'unités de code ; et
un dispositif d'estimation (547a, 547b) destiné à estimer le premier et le deuxième sous-groupe de réception sur base de la probabilité de post-décodage pour le premier et le deuxième sous-groupe de réception d'unités de code.

4. Dispositif de réception selon la revendication 3, dans lequel le décodeur Soft In Soft Out est un décodeur de Bahl-Cocke-Jelinek-Raviv.

5. Dispositif de réception selon la revendication 3 ou 4,
dans lequel est présente, lors de la génération du premier et du deuxième signal d'émission, une fonction d'entremêlement, et
dans lequel le dispositif de décodage (54) présente les caractéristiques suivantes :

un dispositif de démêlement (542a, 542b) destiné à annuler la fonction d'entremêlement pour le premier ou le deuxième signal d'émission, le dispositif de démêlement étant connecté entre le dispositif de reproduction (541a, 541b) et le décodeur (540) ; et
un dispositif d'entremêlement (546a, 546b) qui est réalisé de manière à réaliser la même fonction d'entremêlement, le dispositif d'entremêlement étant disposé entre le décodeur (540) et le dispositif d'estimation (547a, 547b).

6. Dispositif de réception selon l'une des revendications 3 à 5,
dans lequel le dispositif de reproduction (541a, 541b) est réalisé de manière à fonctionner à l'aide d'informations latérales d'une étape d'itération précédente, et
dans lequel les informations latérales extrinsèques sont des probabilités qui sont dérivées des probabilités de post-décodage.

7. Dispositif de réception selon la revendication 6,
dans lequel le dispositif de balayage (40) est réalisé de manière à être synchronisé à l'aide d'une séquence d'apprentissage prédéterminée du premier émetteur (16a) et d'une séquence d'apprentissage prédéterminée du deuxième émetteur (16b).

8. Dispositif de réception selon l'une des revendications 1 à 7,
dans lequel le dispositif de calcul (58) présente les caractéristiques suivantes :

un dispositif (581a) destiné à pondérer le deuxième sous-groupe de réception d'unités de code ou un symbole de modulation dérivé du deuxième sous-groupe de réception d'unités de code avec une caractéristique de canal, pour obtenir un deuxième sous-groupe de réception pondéré ou un symbole de modulation pondéré ;
un deuxième dispositif (581b) destiné à pondérer le premier sous-groupe de réception d'unités de code ou un symbole de modulation dérivé du premier sous-groupe de réception avec une caractéristique de canal, pour obtenir un premier sous-groupe de réception pondéré ou un symbole de modulation pondéré.

9. Dispositif de réception selon la revendication 3,

dans lequel le dispositif de reproduction est un dispositif de démappage à manipulation de phase quaternaire, et

dans lequel le dispositif d'estimation est un dispositif d'estimation d'erreur élevée au carré moyenne minimale.

10. Procédé pour recevoir un signal de réception superposé correspondant à une superposition d'un premier ou deuxième signal d'émission transmis par un premier émetteur (16a) et par un deuxième émetteur (16b) disposé éloigné du premier émetteur (16a), le premier et le deuxième signal d'émission se situant dans la même bande de fréquences, le premier signal d'émission étant généré à l'aide d'un premier sous-groupe d'émission d'unités de code (14a), le deuxième signal d'émission étant généré à l'aide d'un deuxième sous-groupe d'émission d'unités de code (14b), le premier sous-groupe d'émission d'unités de code et le deuxième sous-groupe d'émission d'unités de code représentant ensemble une pluralité d'unités de code générées par un codage à addition de redondance à partir d'un mot d'information avec une pluralité d'unités d'informations, aux étapes suivantes consistant à

balayer (40) le signal de réception superposé de manière synchrone (41a) avec le premier émetteur (16a), pour obtenir un premier signal de réception associé au premier signal d'émission transmis,

balayer le signal de réception superposé de manière synchrone (41b) avec le deuxième émetteur (16b), pour obtenir un deuxième signal de réception associé au deuxième signal d'émission transmis ;

décoder (54) le premier et le deuxième signal de réception (55c, 55d), pour obtenir un premier sous-groupe de réception (56a) d'unités de code associé au premier sous-groupe d'émission d'unités de code,

décoder (54) le premier et le deuxième signal de réception (55e, 55f), pour obtenir un deuxième sous-groupe de réception (56b) d'unités de code associé au deuxième sous-groupe d'émission d'unités de code ;

calculer (56) un premier signal d'interférence à l'aide du deuxième sous-groupe de réception d'unités de code et un deuxième signal d'interférence à l'aide du premier sous-groupe de réception d'unités de code ;

combiner (60) le premier signal d'interférence avec le premier signal de réception et combiner le deuxième signal d'interférence avec le deuxième signal de réception, pour obtenir un premier signal de réception amélioré et un deuxième signal de réception amélioré, pour obtenir une réduction d'interférence ; et

décoder le premier signal de réception amélioré et le deuxième signal de réception amélioré et sortir le mot d'information de la pluralité d'unités d'informations sur base du premier signal de réception amélioré et du deuxième signal de réception amélioré.

## FIG 1

## FIG 2

## FIG 3

EP 1 504 557 B1

FIG 4

FIG 5

FIG 6

FIG 7

FIG 8

FIG 9

Fig. 8.

FIG 10

Fig 11